# EUROPEAN PATENT SPECIFICATION

(11) **EP 2 388 906 B1**
(45) Date of publication and mention of the grant of the patent: **13.06.2018**
(21) Application number: 10731144.1
(22) Date of filing: 13.01.2010
(51) Int. Cl.: H02P 6/182, F25B 1/00, H02P 6/08, H02P 6/14, H02P 6/18

(54) **MOTOR DRIVING DEVICE AND ELECTRIC EQUIPMENT USING SAME**
MOTORANTRIEBSVORRICHTUNG UND ELEKTRISCHE ANLAGE DAMIT
DISPOSITIF DE COMMANDE DE MOTEUR ET APPAREIL ÉLECTRIQUE L'UTILISANT

(30) Priority: 14.01.2009 JP 2009005491; 25.06.2009 JP 2009150643; 21.10.2009 JP 2009242027
(43) Date of publication of application: 23.11.2011
(73) Proprietor: Panasonic Corporation, Kadoma-shi Osaka 571-8501 (JP)
(72) Inventor: TANAKA, Hidehisa, Osaka 540-6207 (JP); TAKEOKA, Yoshinori, Osaka 540-6207 (JP)
(74) Representative: Eisenführ Speiser
(86) International application number: PCT/JP2010/000123
(87) International publication number: WO 2010/082473

(56) References cited:
- JP-A- 2006 101 686
- JP-A- 2008 220 077
- JP-A- 2008 289 310
- JP-A- 2008 289 310
- JP-A- 2008 306 906

## Description

### TECHNICAL FIELD

The present invention relates to a motor driving device for driving a brushless DC motor and electric equipment using the same.

### BACKGROUND ART

A conventional motor driving device drives a motor by switching between speed feedback drive and speed open-loop drive according to a current value or drive speed as disclosed in, for example, Patent Literature 1. Fig. 16 shows a conventional motor driving device described in Patent Literature 1.

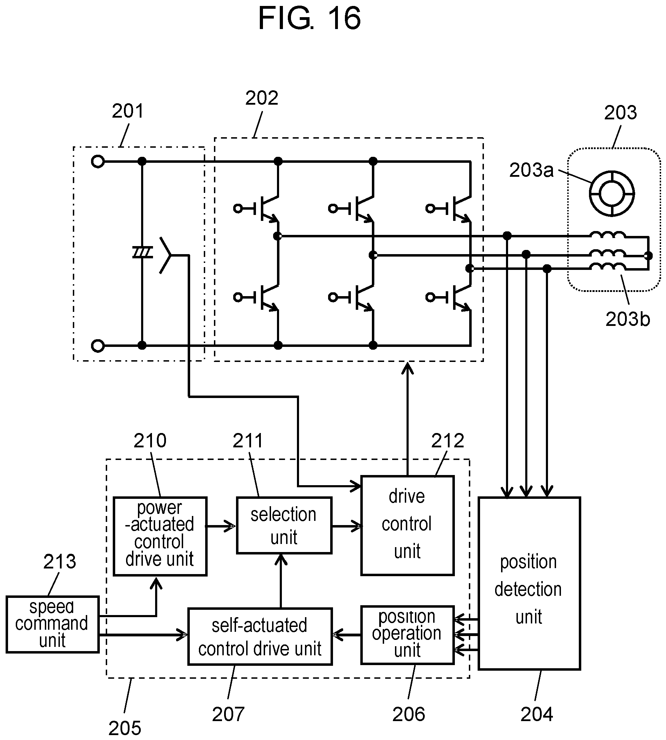

In Fig. 16, DC power supply 201 inputs DC power into inverter 202. Inverter 202 is configured by three-phase bridge connecting six switching elements. Inverter 202 converts the input DC power into AC power having a predetermined frequency, and inputs it into brushless DC motor 203.

Position detection unit 204 obtains information on an induced voltage generated by the rotation of brushless DC motor 203 based on a voltage of an output terminal of inverter 202. Based on the information, position detection unit 204 detects a relative position of rotor 203a of brushless DC motor 203. Control circuit 205 receives an input of a signal output from position detection unit 204, and generates a control signal for a switching element of inverter 202.

Position operation unit 206 operates information on a magnetic pole position of rotor 203a of brushless DC motor 203 based on the signal of position detection unit 204. Self-actuated control drive unit 207 and power-actuated control drive unit 210 output signals each indicating a timing for switching a current to be allowed to flow through three-phase windings of brushless DC motor 203. Such timing signals are signals for driving brushless DC motor 203. Such timing signals output by self-actuated control drive unit 207 drive brushless DC motor 203 by feedback control and are obtained based on the magnetic pole position of rotor 203a obtained from position operation unit 206 and based on speed command unit 213. On the other hand, such timing signals output by power-actuated control drive unit 210 drive brushless DC motor 203 by open-loop control and are obtained based on speed command unit 213. Selection unit 211 selects any one of the signal input from self-actuated control drive unit 207 and the timing signal input from power-actuated control drive unit 210, and outputs the selected signal. In other words, election unit 211 selects between drive of brushless DC motor 203 by self-actuated control drive unit 207 and drive of brushless DC motor 203 by power-actuated control drive unit 210. Drive control unit 212 outputs a control signal for a switching element of inverter 202 based on the signal output from selection unit 211.

The above-mentioned conventional motor driving device switches from self-actuated control drive by feedback control to power-actuated control drive by open-loop control when brushless DC motor 203 is driven at high speed or under high load. Thus, a driving range of brushless DC motor 203 is extended from drive at low speed to drive at high speed, or from drive under low load to drive under high load.

However, in the above-mentioned conventional configuration, in drive at high speed or under high load (hereinafter, referred to as "at high speed / under high load"), brushless DC motor 203 is driven by open-loop control. Therefore, stable drive performance can be obtained when load is small, but a drive state becomes unstable when load is large.
[Patent Literature 2 forms the prior art as defined in the preamble of claims 1 and 5.]

### [Citation List]

### [Patent Literature]

[Patent Literature 1] Japanese Patent Unexamined Publication No. 2003-219681
[Patent Literature 2] Japanese Patent Unexamined Publication No. 2008-289310

### SUMMARY OF THE INVENTION

The present invention solves the above-mentioned conventional problem, and obtains stable drive performance even when a brushless DC motor is driven at high speed / under high load, thereby extending a driving range. Thus, the present invention provides a motor driving device in which an unstable state due to external factors are suppressed and which has high reliability.

A motor driving device as defined in claims 1 and 5 drives a brushless DC motor including a rotor and a stator having three-phase windings. Furthermore, the present invention includes, among others, an inverter for supplying electric power to the three-phase windings, and a first waveform generation unit for outputting a first waveform signal that is a waveform having a conduction angle of 120° or more and 150° or less. Furthermore, the present invention includes a current phase detection
unit for detecting a phase of a current flowing in the brushless DC motor, and a frequency setting unit for setting a frequency by changing only the frequency while keeping a duty constant. Furthermore, the present invention includes a second waveform generation unit for outputting a second waveform signal that is a waveform having a predetermined phase relation with respect to the phase of a current flowing in the brushless DC motor, having the frequency set by the frequency setting unit, and having a conduction angle of 120° or more and less than 180°. Furthermore, the present invention includes an operation switching unit for switching output so that the first waveform signal is output when a speed of the rotor is determined to be lower than a predetermined speed, and the second waveform signal is output when the speed of the rotor is determined to be higher than the predetermined speed. Furthermore, the present invention includes a drive unit for outputting a drive signal to the inverter indicating a supplying timing of electric power supplied to the three-phase windings based on one of the first and the second waveform signals output from the operation switching unit.

With such a configuration, the brushless DC motor is driven based on the first waveform signal that is a waveform having a conduction angle of 120° or more and 150° or less when the speed is low. On the other hand, when the speed is high, the brushless DC motor is driven based on the second waveform signal that is a waveform having a predetermined phase relation with respect to the phase of the current and having a conduction angle of 120° or more and less than 180° according to the frequency.

Therefore, in the motor driving device of the present invention, even in drive at high speed / under high load, the drive is stable and a driving range is extended. Thus, it is possible to provide a motor driving device in which an unstable state due to external factors are suppressed and which has high reliability.

### BRIEF DESCRIPTION OF DRAWINGS

Fig. 1 is a block diagram showing a motor driving device in accordance with a first exemplary embodiment of the present invention.
Fig. 2 is a timing chart of the motor driving device in the exemplary embodiment.
Fig. 3 is a graph illustrating an optimum energization angle of the motor driving device in the exemplary embodiment.
Fig. 4 is another timing chart of the motor driving device in the exemplary embodiment.
Fig. 5 is a graph showing a relation between toque and a phase when a brushless DC motor is driven synchronously in the exemplary embodiment.
Fig. 6 is a graph illustrating a phase relation between a phase current and a terminal voltage of the brushless DC motor in the exemplary embodiment.
Fig. 7A is a graph illustrating a phase relation of the brushless DC motor in the exemplary embodiment.
Fig. 7B is a graph illustrating another phase relation of the brushless DC motor in the exemplary embodiment.
Fig. 7C is a graph showing waveforms of the brushless DC motor in the exemplary embodiment.
Fig. 8 is a flowchart showing an operation of a second waveform generation unit of the motor driving device in the exemplary embodiment.
Fig. 9 is a graph showing a relation between a rotation rate and a duty of the brushless DC motor in the exemplary embodiment.
Fig. 10 is a sectional view showing a principal part of the brushless DC motor in the exemplary embodiment.
Fig. 11 is a block diagram showing a motor driving device in accordance with a second exemplary embodiment of the present invention.
Fig. 12 is a graph showing waveforms of the motor driving device in the exemplary embodiment.
Fig. 13 is a flowchart showing an operation of the motor driving device in the exemplary embodiment.
Fig. 14 is a graph showing a waveform of a terminal voltage of U phase of the motor driving device in the exemplary embodiment.
Fig. 15 is a block diagram showing electric equipment using a motor driving device in accordance with a third exemplary embodiment of the present invention.
Fig. 16 is a block diagram showing a conventional motor driving device.

### DETAILED DESCRIPTION OF PREFERRED EMBODIMENTS

Hereinafter, exemplary embodiments of the present invention are described with reference to drawings.

### FIRST EXEMPLARY EMBODIMENT

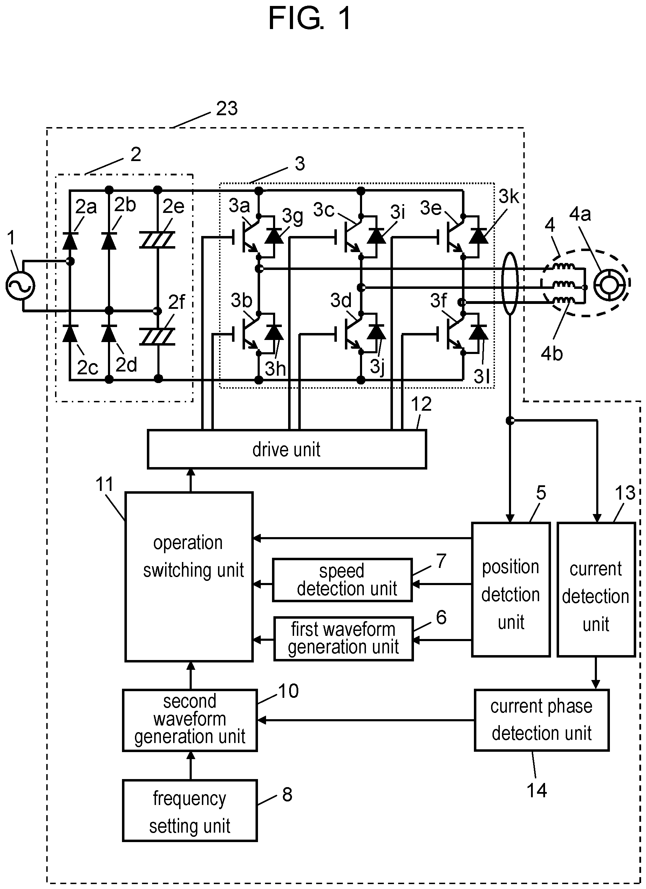

Fig. 1 is a block diagram showing a motor driving device in accordance with a first exemplary embodiment of the present invention. In Fig. 1, AC power supply 1 is a general commercial power supply. In Japan, it is a 50 Hz or 60 Hz power supply having an effective value of 100 V. Motor driving device 23 is connected to AC power supply 1 and drives brushless DC motor 4. Hereinafter, motor driving device 23 is described.

Rectifying and smoothing circuit 2 receives an input of AC power supply 1 and rectifies and smoothes AC electric power to DC electric power. Rectifying and smoothing circuit 2 includes four bridge-connected rectifier diodes 2a to 2d, and smoothing capacitors 2e and 2f. In this exemplary embodiment, rectifying and smoothing circuit 2 is made of a voltage doubler rectifying circuit, but rectifying and smoothing circuit 2 may be made of a full-wave rectifying circuit. Furthermore, in this exemplary embodiment, AC power supply 1 is a single-phase AC power supply. However, when AC power supply 1 is a three-phase AC power supply, rectifying and smoothing circuit 2 is preferably made of a three-phase rectifying and smoothing circuit.

Inverter 3 converts DC power from rectifying and smoothing circuit 2 into AC power. Inverter 3 includes six switching elements 3a to 3f which are connected via a three-phase bridge. Furthermore, return current diodes 3g to 31 are connected in the direction opposite to switching elements 3a to 3f, respectively.

Brushless DC motor 4 includes rotor 4a having a permanent magnet, and stator 4b having three-phase windings. In brushless DC motor 4, a three-phase AC current generated by inverter 3 flows through the three-phase windings so as to rotate rotor 4a.

Position detection unit 5 detects a relative position of the magnetic pole of rotor 4a of brushless DC motor 4. In this exemplary embodiment, position detection unit 5 detects a relative rotation position of rotor 4a based on an induced voltage generated in the three-phase windings of stator 4b. Specifically, when upper and lower switching elements (for example, switching elements 3a and 3b) connected to one winding among the three-phase windings are turned off, a zero-crossing position of the induced voltage generated in the winding of stator 4b by the rotation of rotor 4a is obtained. For example, a voltage of an output terminal of inverter 3 in a phase corresponding to the winding, and an input voltage of inverter 3, that is, 1/2 of an output voltage of rectifying and smoothing circuit 2 are compared with each other, and a point at which a size relation is reversed is obtained as a zero-crossing position. Another method of detecting a position includes a method of performing a vector operation of the detection results of a current in brushless DC motor 4 so as to estimate a magnetic pole position.

First waveform generation unit 6 generates a first waveform signal for driving switching elements 3a to 3f of inverter 3. The first waveform signal is a rectangular wave signal having a conduction angle of 120° or more and 150° or less. In order to smoothly drive brushless DC motor 4 having three-phase windings, the energization angle needs to be 120° or more. On the other hand, in order for position detection unit 5 to detect a position based on the induced voltage, an on/off interval of the switching element needs to be 30° or more. Therefore, the upper limit of the energization angle is 150°, a value obtained by subtracting 30° from 180°. Note here that the first waveform signal may be a waveform similar to the rectangular wave. Examples may include a trapezoid wave having an inclination in rise/fall of a waveform.

First waveform generation unit 6 preferably generates the first waveform signal based on the position information on rotor 4a detected by position detection unit 5. First waveform generation unit 6 carries out pulse width modulation (PWM) duty control in order to keep the rotation rate constant. Thus, brushless DC motor 4 is driven efficiently in an optimum duty based on the rotation position.

Speed detection unit 7 detects a speed of brushless DC motor 4 (that is, a rotation speed) based on the position information detected by position detection unit 5. For example, the speed can be easily detected by measuring a signal from position detection unit 5 generated in a constant cycle. Frequency setting unit 8 sets a frequency by changing only the frequency while keeping a duty constant.

The second waveform generation unit generates a second waveform signal for driving switching elements 3a to 3f of inverter 3 based on the frequency from frequency setting unit 8. The second waveform signal is a rectangular wave signal having a conduction angle of 120° or more and less than 180°. Similar to first waveform generation unit 6, since brushless DC motor 4 has three-phase windings, the energization angle needs to be 120° or more. On the other hand, in second waveform generation unit 10, the on/off interval of the switching element is not necessary, and therefore, the upper limit is made to be less than 180°. By considering the fact that position detection unit 5 detects a zero cross, an off period is appropriately provided. For example, the off period of 5° of a conduction angle may be provided after the zero cross is detected. Note here that the second waveform signal may be any waveform as long as it is similar to a rectangular wave. Furthermore, it may be a sine wave or a distortion wave. In this exemplary embodiment, the duty is the maximum or a state near to the maximum (duty is constant and is 90 to 100%).

Operation switching unit 11 determines whether the rotation speed of rotor 4a is low or high with respect to a predetermined speed, and switches a waveform signal to be input into drive unit 12 between the first waveform signal and the second waveform signal. Specifically, when the speed is low, the first waveform signal is selected, and when the speed is high, the second waveform signal is selected.

Herein, determination of whether the rotation speed is low or high can be carried out based on the actual speed detected by speed detection unit 7. Besides, determination of whether the rotation speed is low or high can be carried out based on the set rotation rate or duty. For example, when the duty is the maximum (generally, 100%), since the speed is the maximum, operation switching unit 11 switches the waveform signal to the second waveform signal.

Furthermore, in drive based on the second waveform signal, when the duty of the first waveform signal is beyond a predetermined reference value, operation switching unit 11 switches an output to drive unit 12 from the first waveform signal to the second waveform signal because the rotation speed is high. On the other hand, in drive based on the second waveform signal, when the target rotation rate is reduced, frequency setting unit 8 reduces the set frequency with the duty unchanged. Thereafter, when position detection by position detection unit 5 becomes possible, operation switching unit 11 switches an output to drive unit 12 from the second waveform signal to the first waveform signal. That is to say, drive of brushless DC motor 4 is switched from the drive based on the second waveform signal to the drive based on the first waveform signal based on the position information of position detection unit 5. Thus, shift between the drive by the first waveform signal and the drive by the second waveform signal can be carried out smoothly. Therefore, drive can be shifted from the drive by the second waveform signal to the drive by the first waveform signal, that is, to highly efficient drive by position detection feedback control.

Drive unit 12 outputs a drive signal indicating a supplying timing of electric power to be supplied by inverter 3 to brushless DC motor 4 based on the waveform signal output from operation switching unit 11. Specifically, the drive signal turns switching elements 3a to 3f of inverter 3 on or off (hereinafter, which is referred to as "on/off'). Thus, an optimum AC power is applied to stator 4b, rotor 4a is rotated, and brushless DC motor 4 is driven.

Current detection unit 13 detects an instantaneous value of a current flowing in brushless DC motor 4. Current phase detection unit 14 detects a phase of the current flowing in brushless DC motor 4. In this exemplary embodiment, current phase detection unit 14 inputs an output from current detection unit 13 into a comparator (not shown), and detects a zero crossing timing so as to detect a current phase. Note here that current detection unit 13 includes a current sensor (not shown). Examples of the current sensor can include current detectors such as a DC current sensor, an AC current sensor, a fixed resistor having an extremely small resistance value.

Furthermore, another method for detecting a current phase includes a method of carrying out an analog / digital (A/D) conversion of a current detected in current detection unit 13 in a predetermined sampling period (for example, a carrier period). That is to say, the current phase detection unit can detect a current phase based on a maximum value, a minimum value, a current zero point, and the like, from the results of the A/D conversion.

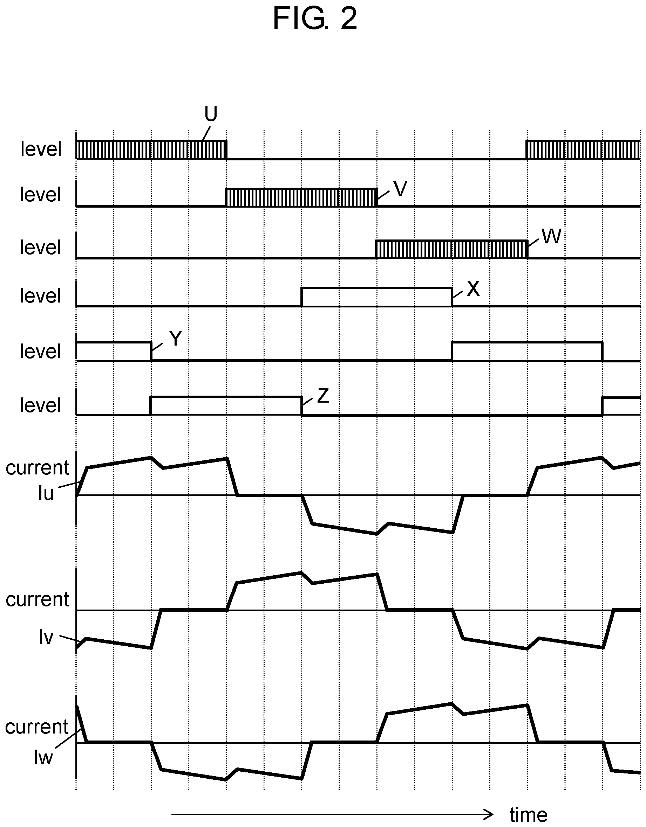

An operation of motor driving device 23 configured as mentioned above is described. Firstly, an operation when the speed of brushless DC motor 4 is low (at low speed) is described. Fig. 2 is a timing chart of motor driving device 23 in the exemplary embodiment. Fig. 2 is a timing chart of a signal for driving inverter 3 at low speed. The signal for driving inverter 3 is a drive signal output from drive unit 12 in order to turn on/off switching elements 3a to 3f of inverter 3. In this case, this drive signal is obtained based on the first waveform signal. For example, the first waveform signal is output from first waveform generation unit 6 based on the output of position detection unit 5.

In Fig. 2, signals U, V, W, X, Y, and Z are drive signals for turning on/off switching elements 3a, 3c, 3e, 3b, 3d, and 3f, respectively. For example, Fig. 2 shows levels of voltages and the like. Waveforms Iu, Iv, and Iw are waveforms of currents of U phase, V phase, and W phase of the windings of stator 4b, respectively. Herein, in drive at low speed, based on a signal of position detection unit 5, commutation is carried out sequentially in the interval of every 120°. Signals U, V, and W are controlled by duty control by PWM control. Furthermore, waveforms Iu, Iv, and Iw that are waveforms of currents of U phase, V phase, and W phase are saw tooth waveforms as shown in Fig. 2. In this case, based on the output of position detection unit 5, the communication is carried out at an optimum timing. Therefore, brushless DC motor 4 is driven most efficiently.

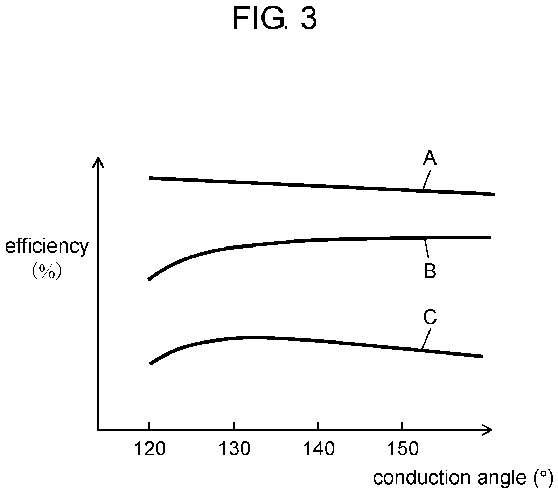

Next, an optimum energization angle is described with reference to Fig. 3. Fig. 3 is a graph illustrating an optimum energization angle of motor driving device 23 in this exemplary embodiment. In particular, Fig. 3 shows a relation between a conduction angle and efficiency at low speed. In Fig. 3, line A denotes circuit efficiency, line B denotes motor efficiency, and line C denotes overall efficiency (the product of circuit efficiency A and motor efficiency B). As shown in Fig. 3, when the energization angle is made to be larger than 120°, motor efficiency B is improved. This is because when the energization angle is widened, the effective value of the phase current of the motor is reduced (that is, the power factor is increased), the copper loss of the motor is reduced, and accordingly motor efficiency B is increased. However, when the energization angle is made to be larger than 120°, the number of switching is increased, so that switching loss may be increased. In such a case, circuit efficiency A is reduced. From the relation between circuit efficiency A and motor efficiency B, a conduction angle capable of obtaining the best overall efficiency C is present. In this exemplary embodiment, a conduction angle at which overall efficiency C is made to be the best is 130°.

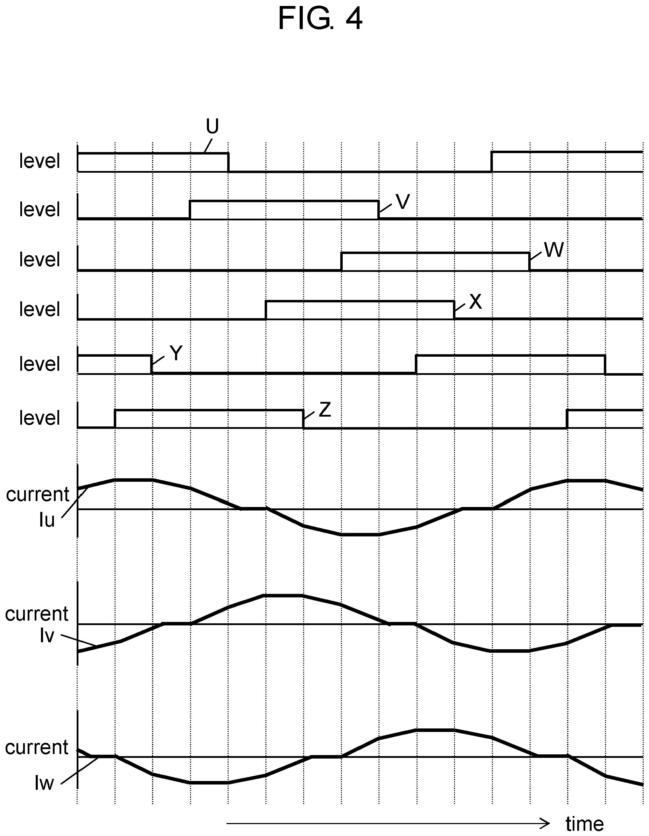

Next, an operation when the speed of brushless DC motor 4 is high (at high speed) is described. Fig. 4 is another timing chart of motor driving device 23 in this exemplary embodiment. Fig. 4 is a timing chart of a drive signal for driving inverter 3 at high speed. In this case, this drive signal is obtained based on the second waveform signal. The second waveform signal is output from second waveform generation unit 10 based on the output of frequency setting unit 8.

Signals U, V, W, X, Y, and Z, as well as waveforms Iu, Iv, and Iw of Fig. 4 are the same as those in Fig. 2. Signals U, V, W, X, Y, and Z output a predetermined frequency based on the output of frequency setting unit 8 and carries out commutation. The energization angle of this case is 120° or more and less than 180°. Fig. 4 shows a case in which the energization angle is 150°. By increasing the energization angle, waveforms Iu, Iv, and Iw of the electric currents of the phases approach a quasi-sine wave.

By increasing the frequency with a duty constant, rotation speed is remarkably increased as compared with a conventional one. In this state in which the rotation speed is increased, a motor is driven as a synchronous motor, and an electric current is increased according to the increase in the drive frequency. In this case, by widening the energization angle to less than 180° that is the maximum angle, a peak current is suppressed. Therefore, even if brushless DC motor 4 is driven with a higher electric current, it is operated without being provided with overcurrent protection.

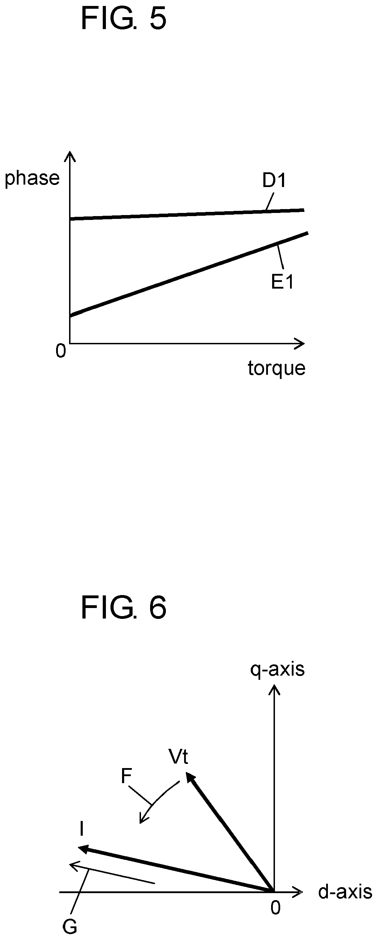

Herein, the second waveform signal generated by second waveform generation unit 10 is described. Fig. 5 is a graph showing a relation between toque and a phase when brushless DC motor 4 is driven synchronously. In Fig. 5, the abscissa shows torque of the motor, and the ordinate shows a phase difference with reference to a phase of an induced voltage, showing that when the phase is positive, the phase of the phase current leads with respect to the phase of the induced voltage. Furthermore, in Fig. 5 showing a stable state of synchronous drive, line D1 shows the phase of the phase current of brushless DC motor 4, and line E1 shows the phase of the terminal voltage of brushless DC motor 4. Herein, since the phase of the phase current leads with respect to the phase of the terminal voltage, it is revealed that brushless DC motor 4 is driven synchronously at high speed. As is apparent from the relation between the phase of the phase current and the phase of the terminal voltage shown in Fig. 5, the change of the phase of the phase current with respect to the load torque is small. On the other hand, since the phase of the terminal voltage changes linearly, the phase difference between the phase current and the terminal voltage changes substantially linearly according to the load torque.

In this way, in synchronous drive, the drive of brushless DC motor 4 is stable in an appropriate relation with respect to the phase of the phase current and the phase of the terminal voltage according to the drive speed and load. In this case, the relation between the phase of the terminal voltage and the phase of the phase current is shown in Fig. 6. In particular, Fig. 6 is a vector diagram showing the relation between the phase of the phase current and the phase of the terminal voltage according to the load on the d-q plane.

In the synchronous drive, when the load is increased, terminal voltage vector Vt keeps the size substantially constant while the phase shifts in the leading direction. With reference to Fig. 6, terminal voltage vector Vt rotates in the direction of arrow F. On the other hand, when the load is increased, current vector I maintains substantially the constant phase while the size thereof changes according to the load increases (for example, a current increases according to the increase in the load). With reference to Fig. 6, current vector I increases in the direction of arrow G. In this way, the phase relation of the voltage vector and the current vector is determined in appropriate states according to the drive environment (input voltage, load torque, drive speed, and the like).

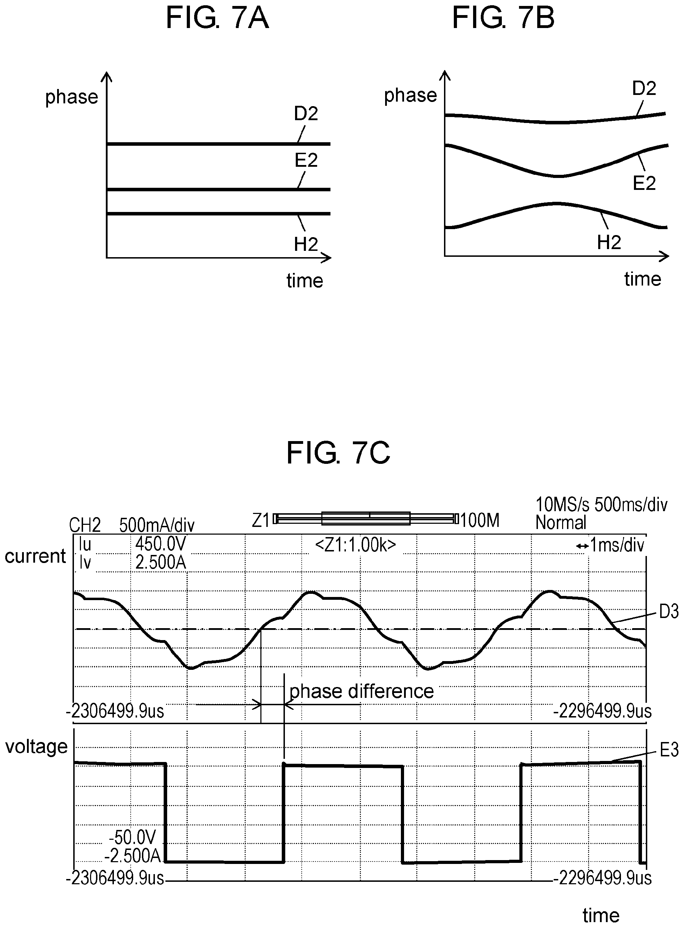

Herein, the change overtime of the phase under certain load or at certain speed when brushless DC motor 4 is driven synchronously in an open loop is described with reference drawings. Figs. 7A and 7B are graphs illustrating the phase relation of brushless DC motor 4. Figs. 7A and 7B show the relation between the phase of the phase current and the phase of the terminal voltage of brushless DC motor 4. In Figs. 7A and 7B, the abscissa shows time, and the ordinate shows a phase with reference to on a phase of an induced voltage (that is, a phase difference with respect to the induced voltage). In both drawings, line D2 shows the phase of the phase current, line E2 shows the phase of the terminal voltage, and line H2 shows the phase difference between the phase current and the terminal voltage. Fig. 7A shows a drive state under low load, and Fig. 7B shows a drive state under high load. Furthermore, from the difference with respect to the phase of the induced voltage, both Figs. 7A and 7B show that the current phase leads with respect to the phase of the terminal voltage, so that brushless DC motor 4 is driven at extremely high speed by synchronous drive. Fig. 7C is a graph showing waveforms of the phase current and the terminal voltage of brushless DC motor 4. In Fig. 7, line D3 shows a waveform of the phase current and line E3 shows a waveform of the terminal voltage. Fig. 7 shows a state in which brushless DC motor 4 is driven at high speed. In other words, it is shown that the phase of the phase current leads with respect to the phase of the terminal voltage.

As shown in Fig. 7A, in synchronous drive in which load is small with respect to the drive speed, rotor 4a is delayed with respect to the commutation by an angle corresponding to the load. That is to say, seen from rotor 4a, the commutation is a leading phase, and a predetermined relation is maintained. In other words, seen from the induced voltage, the phases of the terminal voltage and phase current are leading phases, and a predetermined relation is maintained. This state is the same as the magnetic flux weakening control, and thus high-speed drive is possible.

On the other hand, as shown in Fig. 7B, when load is large with respect to drive speed, rotor 4a is delayed with respect to the commutation, and thereby a magnetic flux weakening state occurs and rotor 4a is accelerated so as to be synchronous to the commutation cycle. Thereafter, with the acceleration of rotor 4a, the phase current is reduced by the decrease of the leading phase of the terminal voltage, and then rotor 4a is decelerated. This state is repeated, and rotor 4a repeats the acceleration and deceleration. This results in an unstable drive state (drive speed). That is to say, as shown in Fig. 7B, the rotation of brushless DC motor 4 changes with respect to the commutation carried out in a constant cycle. Therefore, with reference to the phase of the induced voltage, the phase of the terminal voltage changes. In such a drive state, the rotation of brushless DC motor 4 changes, and accordingly a beat sound may occur. Furthermore, a current pulsates, resulting in the possibility that an overcurrent may be determined to occur and brushless DC motor 4 may be stopped.

Therefore, when brushless DC motor 4 is driven synchronously in an open loop, brushless DC motor 4 is stably driven under low load, but the above-mentioned disadvantages occur when load is high. In other words, when brushless DC motor 4 is driven synchronously in an open loop, drive cannot be carried out at high speed / under high load, so that a driving range cannot be extended.

In motor driving device 23 of this exemplary embodiment, brushless DC motor 4 is driven in a state in which the phase of the phase current and the phase of the terminal voltage are maintained in a phase relation corresponding to the load shown in Fig. 5. A method for maintaining the phase relation between the phase of the phase current and the phase of the terminal voltage is described as follows.

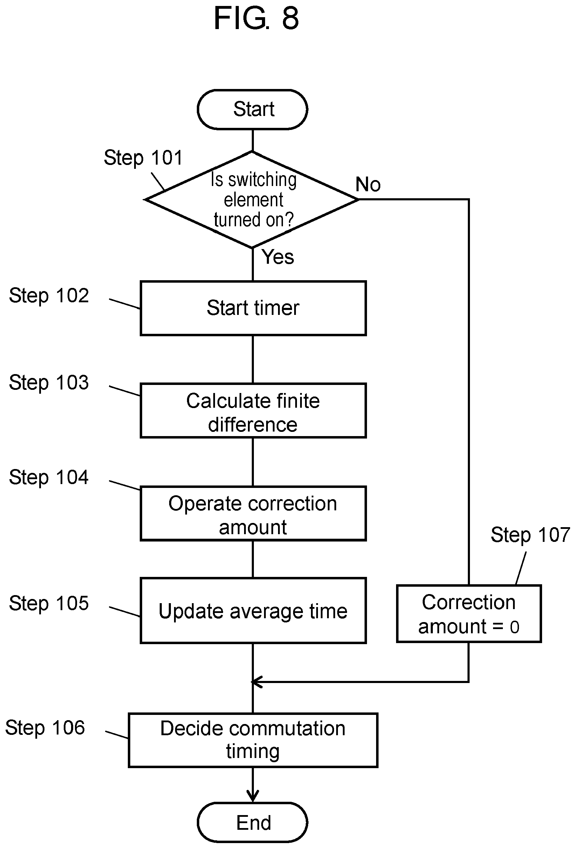

Motor driving device 23 detects a reference phase of the terminal voltage (that is, a reference commutation position of the drive signal) and a reference point of the phase of the phase current; corrects a commutation timing (a certain cycle of commutation) in synchronous drive in an open loop based on the detected reference phase and reference point; and decides a commutation timing in which the phase relation between the phase of the phase current and the phase of the terminal voltage is maintained. Specifically, current phase detection unit 14 detects a current phase based on the current detected by current detection unit 13. With reference to this current phase, an output timing of the terminal voltage is decided. Furthermore, the current phase holds a predetermined phase relation with respect to the induced voltage. Therefore, the phase of the induced voltage, that is, the position of rotor 4a and the phase of the terminal voltage are stable in a predetermined relation. Second waveform generation unit 10 outputs the generated second waveform signal to drive unit 12. An operation of second waveform generation unit 10 is described with reference to a flowchart shown in Fig. 8.

Firstly, Step 101 waits for a timing at which a switching element is turned on, that is, an ON timing of a switching element. In this exemplary embodiment, Step 101 waits for the ON timing of a switching element in the upper side of U phase, that is, switching element 3a of inverter 3. When switching element 3a is turned on (Yes in Step 101), the procedure proceeds to Step 102. In Step 102, a timer for measuring time is started, and the procedure proceeds to Step 103.

Step 103 calculates a finite difference between the time measured in Step 102 and an average of the preceding times, and the procedure proceeds to Step 104. In Step 104, based on the finite difference calculated in Step 103, a correction amount of the commutation timing is arithmetically operated, and the procedure proceeds to Step 105.

Herein, correction of the commutation timing means that a commutation timing is corrected with respect to the frequency set by frequency setting unit 8, that is, with respect to a basic commutation cycle based on a command speed. Therefore, when a large correction amount is added, an overcurrent or loss of synchronization occurs. Therefore, when an arithmetic operation of the correction amount is carried out, it is carried out with a low-pass filter and the like added so as to suppress a rapid change of the commutation timing. Thus, even when a current zero cross is wrongly detected due to, for example, noise, the effect on the correction amount becomes small, and the stability of drive is further improved. Furthermore, since a rapid change is suppressed by the arithmetic operation of the correction amount, the change of the commutation timing for accelerating and decelerating brushless DC motor 4 becomes mild. Therefore, even when the command speed is largely changed and the frequency (commutation cycle) by frequency setting unit 8 is greatly changed, the change of the commutation timing becomes mild, and acceleration and deceleration become smooth.

The correction of the commutation timing specifically means that the phase difference between the phase of the phase current and the phase of the terminal voltage is always allowed to approach the average time. For example, when load is increased, and thereby the rotation speed of rotor 4a is reduced, the phase of the phase current moves in the delayed direction with reference to the phase of the terminal voltage. Therefore, the time measured in Step 102 is longer than the average time from the reference phase of the terminal voltage to the reference phase of the phase current. In this case, second waveform generation unit 10 corrects the commutation timing so as to delay the commutation timing with respect to the timing of the commutation cycle based on the rotation speed (rotation rate). That is to say, since the phase of the phase current is delayed and therefore the measurement time is increased, second waveform generation unit 10 delays the commutation timing to delay the phase of the terminal voltage. Thus, the phase difference between the phase of the terminal voltage and the phase of the phase current is allowed to approach the average time.

On the contrary, when a load is reduced, and thereby the rotation speed of rotor 4a is increased, the phase of the phase current moves in the leading direction with reference to the phase of the terminal voltage. Therefore, the measured time is shorter than the average time from the reference phase of the terminal voltage to the reference phase of the phase current. In this case, second waveform generation unit 10 once corrects the commutation timing so as to advance the commutation timing with respect to the timing of the commutation cycle based on the rotation rate. That is to say, since the phase of the phase current advances and the measurement time is shortened, second waveform generation unit 10 advances the commutation timing and allows the phase of the terminal voltage to be leading. Thus, the phase difference between the phase of the terminal voltage and the phase of the phase current is allowed to approach the average time.

Furthermore, second waveform generation unit 10 corrects a commutation timing in a way in which the commutation timing of a specific phase (for example, only a switching element in the upper side of U phase) is corrected in arbitrary timing (for example, once per rotation of rotor 4a), and the commutation of other phases are corrected in terms of the time of the commutation cycle based on the target rotation rate. Thus, the phase relation between the phase of the phase current and the phase of the terminal voltage is kept optimum according to the load, and the drive speed of brushless DC motor 4 is maintained.

Next, in Step 105, the average time is updated by considering the time measured in Step 102, and procedure proceeds to Step 106. In Step 106, by adding the correction amount to the commutation cycle of the switching element based on the frequency (drive speed) set in the frequency setting unit, the commutation timing is decided.

That is to say, the commutation timing is decided based on the current phase so that a phase difference between the phase of the phase current and the phase of the terminal voltage is always an average phase difference by adding a correction amount to the frequency set in frequency setting unit 8. Therefore, when load is increased, the phase difference that is a difference between the phase of the phase current and the commutation timing is narrowed. Accordingly, the average time as a reference for the correction is reduced, brushless DC motor 4 is driven with reference to the state in which the phase difference is narrowed as compared with the state before the load is increased. Thus, brushless DC motor 4 is driven at a larger leading angle, output torque is increased by the improvement of the magnetic flux weakening effect, and necessary output torque is secured.

On the contrary, when load is reduced, the phase difference that is a difference between the phase of the phase current and the commutation timing is widened. Accordingly, the average time as a reference for the correction is increased, and brushless DC motor 4 is driven based on the state in which the phase difference is widened as compared with the state before the load is reduced. Thus, brushless DC motor 4 is driven at a smaller leading angle, the output torque is reduced by the reduction of the magnetic flux weakening effect, and torque more than necessary is not output. As mentioned above, drive that secures necessary output and that does not output more than necessary output is carried out.

On the other hand, in Step 101, when a certain switching element (switching element 3a in this exemplary embodiment) is not turned on (No in Step 101), the procedure proceeds to Step 107. In Step 107, the correction amount of the commutation timing is defined as 0, and the procedure proceeds to Step 106. In this case, since the correction amount is 0, in Step 106, a timing of the commutation cycle based on the rotation rate is decided as a next-time commutation timing.

Note here that in this exemplary embodiment, since the correction of the commutation cycle is carried out only at the ON timing of switching element 3a in the upper side of U phase, a case in which the correction is carried out once per cycle of electrical angle is described. However, the correction timing may be set by considering the use of motor driving device 23, inertia of brushless DC motor 4, and the like. For example, correction may be carried out once per rotation of rotor 4a, twice per cycle of electrical angle, or every timing at which each switching element is turned on.

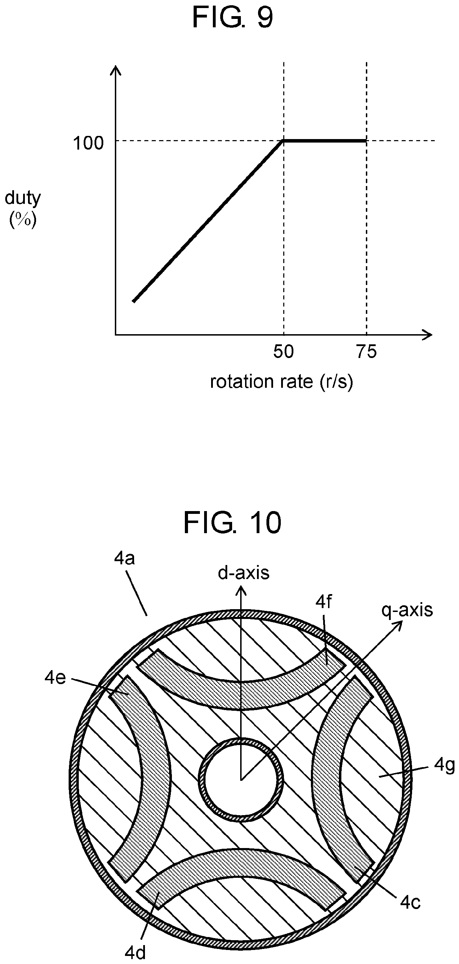

Next, a switching operation by operation switching unit 11 is described. Fig. 9 is a graph showing a relation between a rotation rate and a duty of brushless DC motor 4 in this exemplary embodiment. In Fig. 9, when the rotation rate of brushless DC motor 4, that is, the rotation rate of rotor 4a is 50 r/s or less, brushless DC motor 4 is driven based on the first waveform signal by first waveform generation unit 6. The duty is adjusted to a value showing the highest efficiency according to the rotation rate by feedback control.

When the rotation rate is 50 r/s, the duty is 100%. In the drive based on first waveform generation unit 6, rotation cannot be carried out any more. That is to say, the rotation reaches a limit. In this state, upper limit frequency setting unit 13 sets the upper limit frequency (upper limit rotation rate) at 75 r/s, which is 1.5 times as 50 r/s. When the setting in frequency setting unit 8 is more than 75 r/s, frequency limiting unit 9 follows this upper limit frequency of 75 r/s, and does not output the frequency or higher. When the rotation rate is from 50 r/s to 75 r/s, brushless DC motor 4 is driven in a state in which the duty is constant and only a frequency (that is, a commutation cycle) is increased.

Next, a structure of brushless DC motor 4 of this exemplary embodiment is described. Fig. 10 is a sectional view showing a section perpendicular to the rotation axis of the rotor of brushless DC motor 4 in this exemplary embodiment.

Rotor 4a includes iron core 4g and four magnets 4c to 4f. Iron core 4g is formed by laminating punched silicon steel plates having a thin thickness of about 0.35 to 0.5 mm. For magnets 4c to 4f, circular arc-shaped ferrite permanent magnets are often used. As shown in the drawing, the magnets 4c to 4f are disposed symmetrically with respect to the center so that the circular arc-shaped concave portions face outward. On the other hand, when a permanent magnet made of rare earth such as neodymium is used for magnets 4c to 4f, magnets 4c to 4f may have a flat plate shape.

In rotor 4a having such a structure, an axis extending from the center of rotor 4a to the center of one magnet (for example, 4f) is defined as a d-axis, and an axis extending from the center of rotor 4a to a place between one magnet (for example, 4f) and the adjacent magnet (for example, 4c) is defined as q-axis. Inductance Ld in the d-axis direction and inductance Lq in the q-axis direction have inverse saliency, and they are different from each other. This means that, as a motor, in addition to torque by a magnet flux (magnet torque), torque using inverse saliency (reluctance torque) can be effectively used. Therefore, as a motor, the torque can be used more effectively. As a result, in this exemplary embodiment, a highly efficient motor can be obtained.

Furthermore, in the control in this exemplary embodiment, when drive by frequency setting unit 8 and second waveform generation unit 10 is carried out, the phase current becomes a leading phase. Therefore, since the reluctance torque is largely used, the motor can be driven at higher rotation speed as compared with a motor without having inverse saliency.

### SECOND EXEMPLARY EMBODIMENT

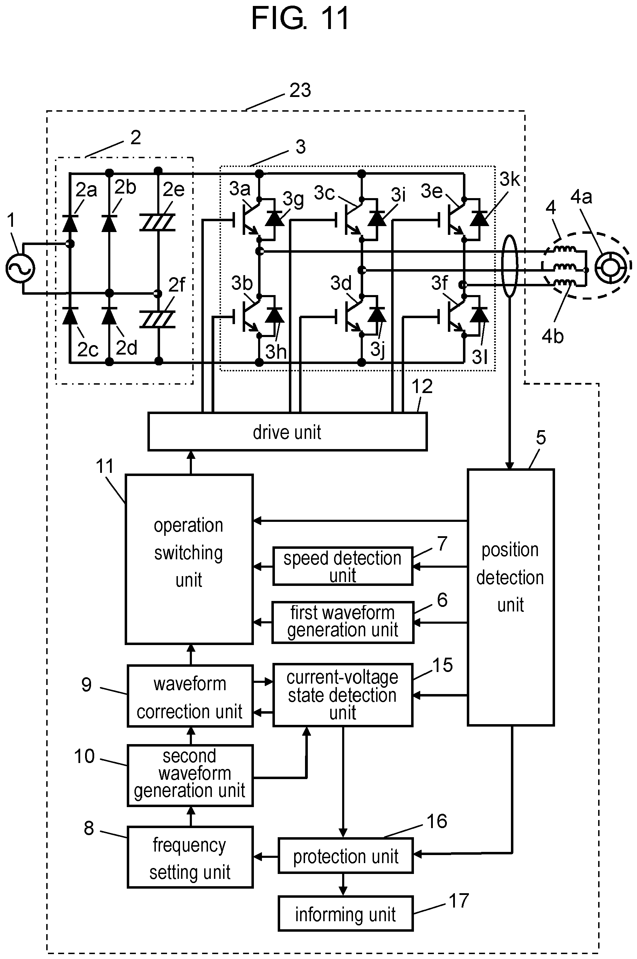

Fig. 11 is a block diagram showing a motor driving device in accordance with a second exemplary embodiment of the present invention. The same components as those described in the first exemplary embodiment are described with the same reference numerals given.

Motor driving device 23 of this exemplary embodiment detects a phase of a current in a winding of stator 4b (for example, a zero-crossing point) by position detection unit 5. Specifically, a current phase is detected from a terminal voltage of inverter 3. Furthermore, motor driving device 23 includes waveform correction unit 9 for correcting a second waveform signal generated by a second waveform generation unit. The second waveform signal transmitted to operation switching unit 11 is corrected via waveform correction unit 9. At this time, in order to prevent abnormality in drive of brushless DC motor 4 in advance, protective control is carried out. The protective control is carried out by protection unit 16. Furthermore, informing unit 17 is provided for informing the abnormality when protection unit 16 needs to carry out the protective control.

Position detection unit 5 in this exemplary embodiment detects a relative position of rotation of rotor 4a based on an induced voltage generated according to the rotation of brushless DC motor 4. A circuit configuration of position detection unit 5 is the same as the circuit configuration of position detection unit 5 in the first exemplary embodiment. Note here that position detection unit 5 in this exemplary embodiment detects a second waveform signal via waveform correction unit 9, that is, a timing at which a winding current becomes zero in the drive based on a correction waveform signal.

Herein, a case in which a state in which a switching element (for example, 3a) of inverter 3 is turned on and a current flows in a winding of brushless DC motor 4 is changed to a state in which switching element 3a is turned off is considered. The current in the winding releases energy stored in the winding via diode 3h connected in opposite parallel to switching element 3b that is a switching element in the phase corresponding to switching element 3a and being opposite to switching element 3a in the vertical direction. Since diode 3h is turned on and a current is allowed to flow, a spike voltage is generated in an output terminal voltage of inverter 3. Furthermore, when a current of diode 3h becomes zero, the spike voltage disappears. Therefore, a timing at which the spike voltage disappears is a timing at which the winding current of brushless DC motor 4 becomes zero.

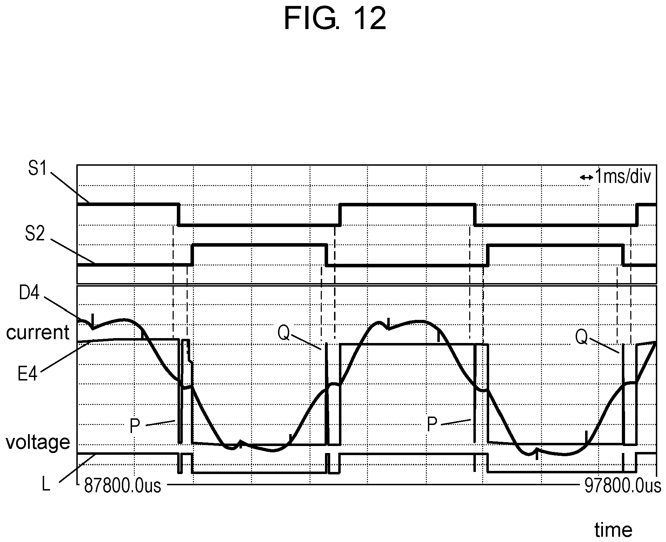

Fig. 12 is a graph showing waveforms of signals for driving switching elements 3a and 3b in U phase of inverter 3, the winding current, and the terminal voltage in the exemplary embodiment. In Fig. 12, signal S1 is a drive signal of switching element 3a of inverter 3, and signal S2 is a drive signal of switching element 3b of inverter 3. When these drive signals are high, the respective switching elements are turned on. Waveform D4 is a waveform of a winding current of U phase of stator 4b of brushless DC motor 4. Waveform E4 is a voltage waveform of an output terminal of U phase of inverter 3. Waveform L is a waveform outputting the results detected by position detection unit 5. Spike waveforms P and Q are spike voltages generated when switching elements 3a and 3b are turned off. Specifically, spike waveform P is generated when diode 3h is turned on when switching element 3a is turned off. Spike waveform Q is generated when diode 3g is turned on when switching element 3b is turned off.

Position detection unit 5 compares a voltage of the output terminal of inverter 3 with a reference voltage (for example, 1/2 of an input voltage of inverter 3), and outputs a high signal when the terminal voltage is higher than the reference voltage, and outputs a low signal when the terminal voltage is lower than the reference voltage. Therefore, as shown in waveform L of Fig. 12, the output of an output signal of position detection unit 5 changes according to the spike voltages (spike waveforms P and Q).

When brushless DC motor 4 is driven based on a first waveform signal without using position detection, this spike voltage is ignored. On the other hand, when brushless DC motor 4 is driven based on a second waveform signal via waveform correction unit 9, that is, a correction waveform signal in this exemplary embodiment, position detection unit 5 detects a current phase based on a timing at which this spike voltage disappears as a phase of a zero point of the winding current.

Current-voltage state detection unit 15 detects a state of a current flowing in brushless DC motor 4 and a terminal voltage based on the output signal of position detection unit 5 and the second waveform signal output from second waveform generation unit 10. The state of the current flowing in brushless DC motor 4 and the terminal voltage is, for example, a phase difference between the phase current and the terminal voltage. Another state of the current flowing in brushless DC motor 4 and the terminal voltage is a time difference of specific conditions such as a zero cross. Furthermore, a method of easily detecting the state obtains not a terminal voltage itself, but carries out detection based on the drive signal, which substantially corresponds to the terminal voltage, output by drive unit 12.

In this exemplary embodiment, a time difference between the zero cross of the current and the rising of the drive signal is detected as a current-voltage state. Therefore, current-voltage state detection unit 15 recognizes the zero crossing point of the current by obtaining a timing at which the spike voltage disappears in the output signal of position detection unit 5. Specifically, current-voltage state detection unit 15 obtains a timing at which the output of the position detection signal is reversed when the switching elements in the upper and lower sides of the phase are turned off.

Note here that as mentioned above, position detection unit 5 determines whether the voltage of the output terminal of inverter 3 is higher or lower than a reference value (for example, 1/2 of the input voltage of inverter 3). Therefore, the same configuration and the same method as those in the detection of the zero-crossing point of the induced voltage of brushless DC motor 4 described in the first exemplary embodiment can be used.

Protection unit 16 compares a time difference between a timing of the current zero cross of brushless DC motor 4 from position detection unit 5 detected by current-voltage state detection unit 15 and a timing of a drive signal in the same phase that rises immediately after the current zero cross with a preset time. When the time difference is smaller than the preset time, protection unit 16 instructs frequency setting unit 8 to set a frequency that is lower than the present frequency in order to lower a speed command. Furthermore, protection unit 16 outputs a limit determination signal, which indicates that the load of brushless DC motor 4 is around the limit, to informing unit 17. Note here that when the time difference is larger than the preset time, protection unit 16 carries out noting particular.

When informing unit 17 receives an input of the limit determination signal from protection unit 16, it provides a user with information. This allows the user to maintain a system by, for example, reducing load. Note here that informing unit 17 can provide information by using, display or sound. For example, when motor driving device 23 is used for driving a compressor of a refrigerator, informing unit 17 is disposed on the surface of the door of the refrigerator, so that the user can easily confirm the information.

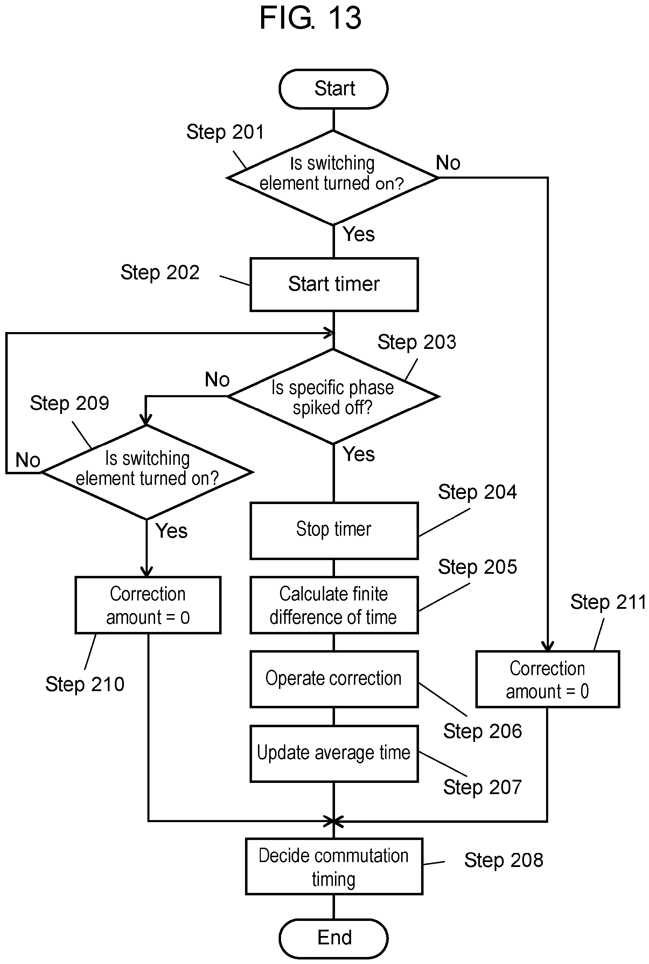

Herein, as a method for maintaining the phase relation between a terminal voltage and a current, in this exemplary embodiment, by detecting the reference phase of the terminal voltage (that is, a reference commutation position of the drive signal) and the reference point of the current phase, a commutation timing (a certain cycle of commutation) in synchronous drive in an open loop is corrected. Hereinafter, operations of waveform correction unit 9 and current-voltage state detection unit 15 are described with reference to a flowchart in Fig. 13.

Firstly, in Step 201, current-voltage state detection unit 15 waits for a timing at which a switching element is turned on, that is, an ON timing of a switching element based on a correction waveform signal output from waveform correction unit 9. In this exemplary embodiment, current-voltage state detection unit 15 waits for the ON timing of a switching element in the upper side of U phase, that is, switching element 3a of inverter 3. When switching element 3a is turned on (Yes in Step 201), the procedure proceeds to Step 202. In Step 202, current-voltage state detection unit 15 starts a timer for measuring time, and the procedure proceeds to Step 203.

In Step 203, position detection unit 5 determines whether or not a spike of a specific phase is turned off. In other words, position detection unit 5 determines whether or not a spike voltage of a specific phase decreases from the terminal voltage by a voltage reduction amount of the switching element, or from the terminal voltage to around 0 V. In this exemplary embodiment, since the specific phase is U phase, position detection unit 5 determines whether or not the terminal voltage of U phase decreases to around 0 V. In other words, a timing at which the specific phase is spiked off is a timing at which a current flowing through return current diode 3g does not flow after the switching element in the lower side of U phase, that is, switching element 3b of inverter 3 is turned off. Determination of this timing is determination of a timing at which the direction of a current changes from negative to positive, that is, a zero crossing timing of the current. When the spike voltage decreases to around 0 V, that is, the specific phase is spiked off (Yes in Step 203), the procedure proceeds to Step 204.

In Step 204, current-voltage state detection unit 15 stops the timer started in Step 202, and stores a timer count value. The procedure proceeds to Step 205. That is to say, the period from a time at which switching element 3a is turned on to a time at which the spike voltage generated during a period in which a current flows through return current diode 3g is turned off is measured, and then the procedure proceeds to Step 205.

In Step 205, current-voltage state detection unit 15 calculates a finite difference between the time measured in Step 204 and an average of the preceding times, and the procedure proceeds to Step 206. In Step 206, based on the finite difference calculated in Step 205, a correction amount of the commutation timing is arithmetically operated, and the procedure proceeds to Step 207.

Herein, correction of the commutation timing means that a commutation timing is corrected with respect to the frequency set by frequency setting unit 8, that is, with respect to a basic commutation cycle based on the command speed. Therefore, when a large correction amount is added, an overcurrent or loss of synchronization occurs. Therefore, when an arithmetic operation of the correction amount is carried out, it is carried out with a low-pass filter and the like added so as to suppress a rapid change of the commutation timing. Thus, even when a zero cross of a current is wrongly detected due to, for example, a noise, the effect on the correction amount becomes smaller, thus further improving the stability of drive. Furthermore, since a rapid change is suppressed by the arithmetic operation of the correction amount, the change of the commutation timing for accelerating and decelerating brushless DC motor 4 becomes mild. Therefore, even when the command speed is largely changed and the frequency (commutation cycle) by frequency setting unit 8 is greatly changed, the change of the commutation timing becomes mild, and acceleration and deceleration become smooth.

The correction of the commutation timing specifically means that the phase difference between the phase of the phase current and the phase of the terminal voltage is always allowed to approach the average time. For example, when load is increased, and thereby the rotation speed of rotor 4a is reduced, the phase of the phase current moves in the delayed direction with reference to the phase of the terminal voltage. Therefore, the time measured in Step 204 is longer than the average time from the reference phase of the terminal voltage to the reference phase of the phase current. In this case, waveform correction unit 9 corrects the commutation timing so as to delay the commutation timing with respect to the timing of the commutation cycle based on the rotation speed (rotation rate). That is to say, since the phase of the phase current is delayed and therefore the measurement time is increased, waveform correction unit 9 delays the commutation timing so as to delay the phase of the terminal voltage. Thus, the phase difference between the phase of the terminal voltage and the phase of the phase current is allowed to approach the average time as a target state.

On the contrary, when a load is reduced, and thereby the rotation speed of rotor 4a is increased, the phase of the phase current moves in the leading direction with reference to the phase of the terminal voltage. Therefore, the measured time is shorter than the average time from the reference phase of the terminal voltage to the reference phase of the phase current. In this case, waveform correction unit 9 once corrects the commutation timing so as to advance the commutation timing with respect to the timing of the commutation cycle based on the rotation rate. That is to say, since the phase of the phase current advances and therefore the measurement time is shortened, current-voltage state detection unit 15 advances the commutation timing and allows the phase of the terminal voltage to be leading. Thus, the phase difference between the phase of the terminal voltage and the phase of the phase current is allowed to approach the average time as a target state.

Furthermore, waveform correction unit 9 corrects a commutation timing in a way in which the commutation timing of a specific phase (for example, only a switching element in the upper side of U phase) is corrected in arbitrary timing (for example, once per rotation of rotor 4a), and the commutation timings of the other phases are corrected in terms of the time of the commutation cycle based on the target rotation rate. Thus, the phase relation between the phase of the phase current and the phase of the terminal voltage is kept optimum according to the load, and the drive speed of brushless DC motor 4 is maintained.

Next, in Step 207, the average time is updated by considering the time measured in Step 204, and procedure proceeds to Step 208. In Step 208, by adding the correction amount to the commutation cycle of the switching element based on the frequency (drive speed) set in the frequency setting unit, the commutation timing is decided.

That is to say, when load is increased, the phase difference that is a difference between the phase of the phase current and the commutation timing is narrowed. Accordingly, the average time as a reference for the correction is reduced, brushless DC motor 4 is driven with reference to the state in which the phase difference is narrowed as compared with the state before the load is increased. Thus, brushless DC motor 4 is driven at a larger leading angle, output torque is increased by the improvement of the magnetic flux weakening effect, and necessary output torque is secured.

On the contrary, when load is reduced, the phase difference that is a difference between the phase of the phase current and the commutation timing is widened. Accordingly, the average time as a reference for the correction is increased, and brushless DC motor 4 is driven based on the state in which the phase difference is widened as compared with the state before the load is reduced. Thus, brushless DC motor 4 is driven at a smaller leading angle, output torque is reduced by the reduction of the magnetic flux weakening effect, and torque more than necessary is not output. As mentioned above, drive that secures necessary output and that does not output more than necessary output is carried out.

On the other hand, when a specific phase is not spiked off in Step 203 (No in Step 203), the procedure proceeds to Step 209. Step 209 determines whether or not a certain switching element is turned on, that is, commutation is carried out. Herein, the certain switching element is a switching element in which on/off is changed at a timing at which an interval capable of occurring a spike is terminated. In this exemplary embodiment, the certain switching element is switching element 3a in the upper side of U phase. Herein, when switching element 3a is not turned on (No in Step 209), the procedure returns to Step 203 again. Since the case in which switching element 3a is turned on (Yes in Step 209) means that a spike does not occur, the procedure proceeds to Step 210. In Step 210, a correction amount of the commutation timing is defined as 0, and the procedure proceeds to Step 208. In this case, since the correction amount is 0, in Step 208, the timing of the commutation cycle based on the rotation rate is decided as the next commutation timing.

Note here that the state in which a spike does not occur means a state in which the phase of the phase current is sufficiently leading with respect to the phase of the terminal voltage. That is to say, it is a state in which brushless DC motor 4 is stably driven because the load is small, necessary torque is sufficiently secured, and correction is not carried out.

On the other hand, in Step 201, when a certain switching element (switching element 3a in this exemplary embodiment) is not turned on (No in Step 201), the procedure proceeds to Step 211. In Step 211, the correction amount of the commutation timing is defined as 0, and the procedure returns to Step 208. In this case, since the correction amount is 0, in Step 208, a timing of the commutation cycle based on the rotation rate is decided as a next-time commutation timing.

Note here that in this exemplary embodiment, since the correction of the commutation cycle is carried out only at the ON timing of switching element 3a in the upper side of U phase, a case in which the correction is carried out once per cycle of electrical angle is described. However, the correction timing may be set by considering the use of motor driving device 23, inertia of brushless DC motor 4, and the like. For example, correction may be carried out once per rotation of rotor 4a, twice per cycle of electrical angle, and every timing at which each switching element is turned on.

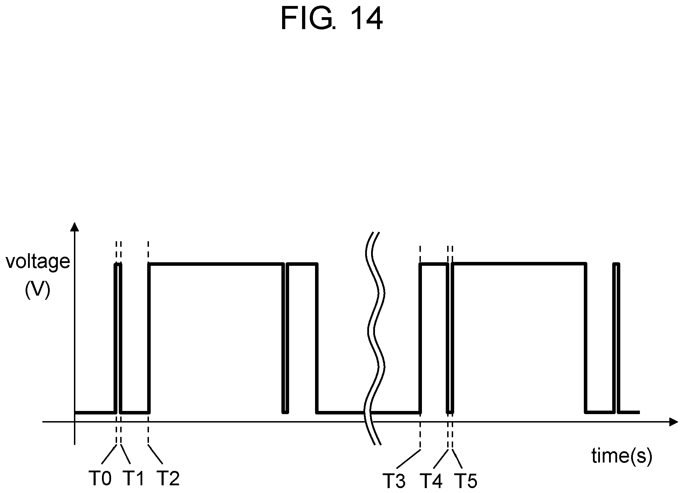

Next, protection unit 16 is described with reference to Figs. 5 and 14. Fig. 14 shows a waveform of a terminal voltage of U phase at the time of synchronous drive in this exemplary embodiment. Firstly, the waveform shown in Fig. 14 is described. At time T0, switching element 3b in the lower side of U phase is turned off. When an electric current flowing in U phase flows in the negative direction, a current flows in return current diode 3g. In other words, as shown in T0 to T1, the terminal voltage is a voltage at the P side of the voltage between P and N, which is an input of inverter 3. Thereafter, when an electric current is 0 at time T1, the terminal voltage is 0 V, and the terminal voltage is 0 V in T1 to T2. At time T2, switching element 3a in the upper side of U phase is turned on, so that the terminal voltage becomes a voltage at the P side again. Also in T3 to T5, the waveform of the terminal voltage of U phase is changed by the operation similar to that in T1 to T2.

Herein, the waveform of the terminal voltage of U phase shown in T0 to T2 shows a state in which brushless DC motor 4 is driven at high speed and load is light. That is to say, it shows a case in which brushless DC motor 4 has a torque margin. On the other hand, the waveform of the terminal voltage of U phase shown in T3 to T5 shows a state in which brushless DC motor 4 is driven at high speed and load is heavy. That is to say, it shows a case in which brushless DC motor 4 does not have a torque margin.

Protection unit 16 receives a period of time from a time at which a lower-side switching element of a specific phase (for example, switching element 3b) of the timing shown in T1 or T4 is turned off to a timing at which a downward edge is generated next in the terminal voltage, as an input from current-voltage state detection unit 15. Thereafter, in the correction waveform signal output from waveform correction unit 9, the period of time until a time at which an upper side switching element of the specific phase (for example, switching element 3a) is turned on is calculated based on the time commutation cycle. In Fig. 14, current-voltage state detection unit 15 measures periods from T0 to T1 and from T3 to T4, and calculates periods from T1 to T2 and from T4 to T5 based on the time commutation cycle. As shown in Fig. 5, the larger the load of brushless DC motor 4 is, the smaller the phase difference between the phase current and the terminal voltage of brushless DC motor 4 becomes. Therefore, the time measured by protection unit 16 is shortened. In other words, the time length measured by protection unit 16 shows a size of load. Specifically, when the time is smaller than a predetermined time, since it is determined that brushless DC motor 4 approaches the load such that synchronization is lost, protective control is carried out. Note here that the predetermined time is, for example, a time corresponding to limit torque in each speed of brushless DC motor 4. Alternatively, the predetermined time is a time corresponding to assumed maximum load. In addition, the predetermined time may not be based on the rotation rate but may be calculated theoretically.

The protective control carried out by protection unit 16 is, for example, to lower the speed until the phase difference between the phase current and the terminal voltage of brushless DC motor 4 is secured. Thus, the load of brushless DC motor 4 is reduced. In other words, brushless DC motor 4 does not lose synchronization and can be driven at maximum capacity. Other examples of the protective control carried out by protection unit 16 include stopping the drive of brushless DC motor 4 once, waiting for the reduction of load, and then restarting drive. Thus, demagnetization of brushless DC motor 4 or destruction of a switching element of inverter 3 due to an overcurrent is prevented.

Furthermore, informing unit 17 receives a limit determination signal informing that the load of brushless DC motor 4 is around the limit from protection unit 16. When informing unit 17 receives the limit determination signal, it provides a user with information indicating that the protective control is carried out. Based on the information, the user removes causes of load. For example, in a refrigerator, when such information is provided in a case where a high-temperature food is placed in the inside of the refrigerator, a user takes out the food to the outside the refrigerator once, cools it and then places it into the inside of the refrigerator.

Note here that in drive of brushless DC motor 4 based on the second waveform signal via waveform correction unit 9, that is, the correction waveform signal, when a target rotation rate is lowered, frequency setting unit 8 decreases the set frequency with the duty unchanged. Thereafter, when the position detection can be carried out by position detection unit 5, operation switching unit 11 switches an output to drive unit 12 from the second waveform signal to the first waveform signal. That is to say, drive of brushless DC motor 4 is switched from drive based on the second waveform signal to drive based on the first waveform signal on the basis of the position information of position detection unit 5. Thus, brushless DC motor 4 can be driven at high efficiency by position detection feedback control.

### THIRD EXEMPLARY EMBODIMENT

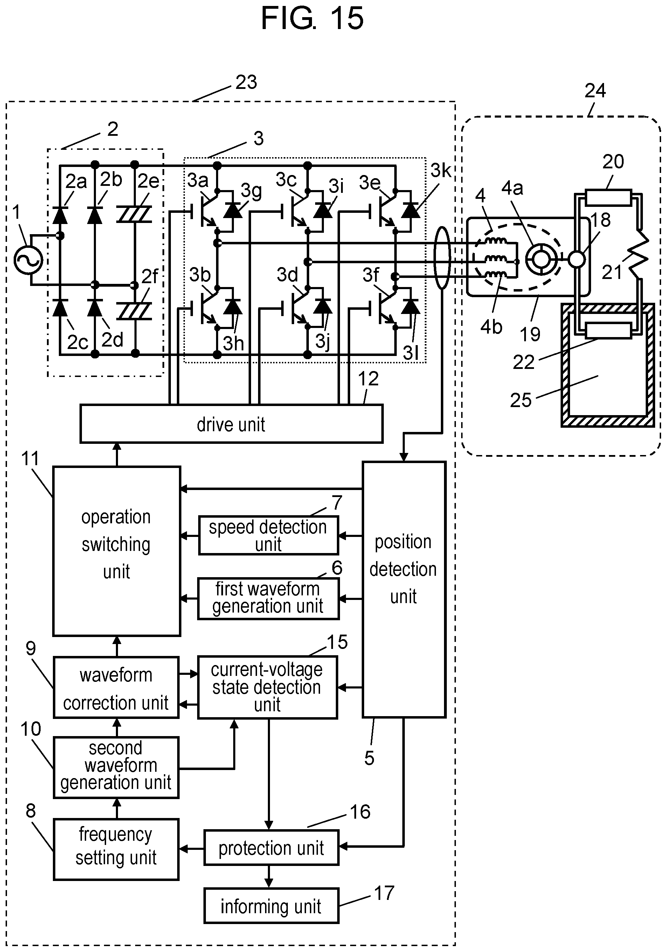

Fig. 15 is a block diagram showing electric equipment using a motor driving device in accordance with a third exemplary embodiment of the present invention. In Fig. 15, the same reference numerals are given to the same components as in Figs. 1 and 14.

Brushless DC motor 4 is connected to compression element 18 to form compressor 19. In this exemplary embodiment, compressor 19 is used in a refrigerating cycle. In other words, a high-temperature and high-pressure refrigerant discharged from compressor 19 is transmitted to condensation device 20, and it is liquefied, made to be low pressure in capillary tube 21, evaporated in evaporator 22, and returned to compressor 19 again. Furthermore, in this exemplary embodiment, the case in which the refrigerating cycle using motor driving device 23 is used for refrigerator 24 as electric equipment is described. Evaporator 22 cools inside 25 of refrigerator 24.

In this way, in this exemplary embodiment, brushless DC motor 4 drives compression element 18 of compressor 19 of the refrigerating cycle. Herein, when compressor 19 is a reciprocating motion type (recipro type), in the configuration, a large-mass metallic crank shaft and a piston are connected to brushless DC motor 4, which makes load with extremely large inertia. Therefore, the change in the speed for a short time is extremely small regardless of processes in the refrigerating cycle of compressor 19 (suction process, compression process, and the like). Therefore, even if commutation timing is decided based on a phase of a current of only one arbitrary phase, the change in the speed does not become large, and thus stable driving performance can be obtained. Furthermore, in the control of compressor 19, highly accurate control of rotation rate, control of acceleration and deceleration, or the like, is not required. Therefore, motor driving device 23 of the present invention is one of the extremely effective applications in drive of compressor 19.

Furthermore, as compared with the case in which a compressor is driven by a conventional motor driving device, a driving range can be extended. Therefore, driving at higher speed can enhance refrigeration capacity of the refrigerating cycle. Thus, a cooling system having the same configuration as conventional one can be applied for a system that requires higher refrigeration capacity. Therefore, a refrigerating cycle that requires high refrigeration capacity can be miniaturized, and can be provided at a low cost. Furthermore, in the refrigerating cycle using a conventional motor driving device, a compressor whose refrigeration capacity is smaller by one rank (for example, a compressor cylinder volume is small) can be used. Thus, a cooling cycle can be further miniaturized and cost reduction can be achieved.

In this exemplary embodiment, compressor 19 is used for cooling inside 25 of refrigerator 24. Refrigerator 24 has use conditions in which the door is opened frequently in limited time, for example, in the hours of housework in the morning and in the evening, or in the summer season. On the contrary, most of the time in the day, the door is not opened frequently, and a cooling state in inside 25 is stable. In this case, brushless DC motor 4 is driven under low-load conditions. Therefore, in order to reduce power consumption of refrigerators, it is effective to improve the driving efficiency of brushless DC motor 4 at low speed / under low load.

Herein, in order to improve the driving efficiency at low speed / under low load, in other words, in order to reduce the power consumption in brushless DC motor 4, the number of windings of stator 4b is preferably increased. In this state, however, brushless DC motor 4 cannot correspond to the drive at high speed / under high load. On the other hand, in order to improve the driving performance of brushless DC motor 4 at high speed / under high load, the number of windings of stator 4b is preferably reduced, but the power consumption increases. In the present invention, since a driving range of brushless DC motor 4 at high speed / under high load can be extended, brushless DC motor 4 having a high driving efficiency at low speed / under low load and having small power consumption can be also used. Thus, in refrigerator 24, the driving efficiency of brushless DC motor 4 under low-load conditions in most of the day is improved, resulting in reduction of the power consumption of refrigerator 24.

Herein, design of the winding of the motor of brushless DC motor 4 used in refrigerator 24 in this exemplary embodiment is described. When drive is carried out at the rotation rate and in the load state which are used most frequently as refrigerator 24 (for example, the rotation rate is 40 Hz and the compressor input electric power is about 80 W), the winding is designed so that the duty is 100% at 120-150° energization by first waveform generation unit 6. Thus, iron loss of brushless DC motor 4 and switching loss of inverter 3 can be reduced. Thus, the highest efficiency can be obtained in both motor efficiency and circuit efficiency. As a result, power consumption as refrigerator 24 can be minimized.

Furthermore, by extending a driving range at high speed / under high load, the refrigeration capacity of the refrigerating cycle is improved, and the inside of a refrigerator or foods can be cooled for a shorter time as compared with refrigerators having a refrigerating cycle using a conventional motor driving device. For example, it is effective in the high-load conditions in which the temperature of inside 25 is high, for example, when the door of refrigerator 24 is opened frequently, or after defrosting operation is carried out, or immediately after the refrigerator is installed; or in rapid freezing operation carried out when hot foods are placed in the refrigerator and the foods are desired to be rapidly cooled or frozen. Furthermore, since the refrigeration capacity of the refrigerating cycle is improved, a small refrigerating cycle can be used for refrigerator 24 having high capacity. Furthermore, since the refrigerating cycle is small, the inside volumetric efficiency (volume of a portion accommodating foods with respect to the total volume of a refrigerator) is improved. Thus, the cost reduction of refrigerator 24 can be achieved.

Furthermore, in conventional motor driving devices, in order to correspond to the drive at high speed / under high load, it was necessary to use a brushless DC motor in which necessary torque is secured by reducing the number of windings of the winding. In such a brushless DC motor, noise and the like of the motor is large. When motor driving device 23 of this exemplary embodiment is used, even when brushless DC motor 4 in which torque is reduced by increasing the number of windings of the winding is used, drive at high speed / under high load can be carried out. Thus, the duty when the rotation rate is low can be increased as compared with the case in which a conventional motor driving device is used. Therefore, noise of the motor, in particular, carrier noise (corresponding to a frequency in PWM control, for example, 3 kHz) can be reduced.

Note here that in this exemplary embodiment, brushless DC motor 4 drives compressor 19 of refrigerator 24 as electric equipment. On the other hand, also when a compressor of an air conditioner (not shown) as another electric equipment is driven, highly efficient drive at low speed and drive at high speed / under high load can be carried out. In this case, it can correspond to a wide driving range from the minimum load at the time of cooling to the maximum load at the time of heating. In particular, power consumption under low load, which is rating or lower, can be reduced.

Furthermore, in this exemplary embodiment, as a configuration of motor driving device 23, a configuration described in the second exemplary embodiment shown in Fig. 11 is described. However, a configuration described in the first exemplary embodiment shown in Fig. 1 can be used.

As described above, the present invention relates to a motor driving device for driving a brushless DC motor including a rotor and a stator having three-phase windings. Furthermore, the present invention includes an inverter for supplying electric power to the three-phase windings; and a first waveform generation unit for outputting a first waveform signal that is a waveform having a conduction angle of 120° or more and 150° or less. Furthermore, the present invention includes a current phase detection unit for detecting a phase of a current flowing in the brushless DC motor; and a frequency setting unit for setting a frequency by changing only the frequency while keeping a duty constant. Furthermore, the present invention includes a second waveform generation unit for outputting a second waveform signal that is a waveform having a predetermined phase relation with respect to the phase of the current flowing in the brushless DC motor, having a frequency set by the frequency setting unit, and having a conduction angle of 120° or more and less than 180°. Furthermore, the present invention includes an operation switching unit for switching output so that the first waveform signal is output when a speed of the rotor is determined to be lower than a predetermined speed, and the second waveform signal is output when the speed of the rotor is determined to be higher than the predetermined speed. Furthermore, the present invention includes a drive unit for outputting a drive signal to the inverter indicating a supplying timing of electric power supplied to the three-phase windings based on one of the first and the second waveform signals output from the operation switching unit.

Thus, the relation between the current phase and the voltage phase of the brushless DC motor is stabilized, and driving stability is improved. This makes it possible to increase the load range and speed range in which the brushless DC motor can be driven.

Furthermore, according to the present invention, the supplying timing of electric power supplied to the three-phase windings is temporarily corrected for maintaining a predetermined phase relation between the phase of the current and a phase of a terminal voltage of the brushless DC motor. Thus, the phase relation between the current phase and the voltage phase of the brushless DC motor is stabilized in an appropriate state according to the load state, and the phase relation is maintained. Therefore, drive at high speed / under high load is stabilized, and a load range in which drive can be carried out is extended.

Furthermore, according to the present invention, switching of a winding in the three-phase windings to which the electric power is supplied, that is, commutation, is carried out at a predetermined timing with reference to the phase of the current of the brushless DC motor. Thus, the phase relation between the current phase and the voltage phase of the brushless DC motor is secured reliably.

Furthermore, the present invention further includes a position detection unit for detecting a rotation position of the rotor. The first waveform generation unit outputs a first waveform signal that is a waveform being generated based on position information from the position detection unit and having a conduction angle of 120° or more and 150° or less. Thus, highly efficient drive can be carried out.

Furthermore, the present invention relates to a motor driving device for driving a brushless DC motor including a rotor and a stator having three-phase windings. Furthermore, the present invention includes an inverter for supplying electric power to the three-phase windings; and a position detection unit for detecting a rotation position of the rotor. Furthermore, the present invention includes a first waveform generation unit for outputting a first waveform signal that is a waveform having a conduction angle of 120° or more and 150° or less based on an output of the position detection unit. Furthermore, the present invention includes a frequency setting unit for setting a frequency by changing only the frequency while keeping a duty constant; and a second waveform generation unit for outputting a second waveform signal that is a waveform having a conduction angle of 120° or more and less than 180°, and a frequency set by the frequency setting unit. Furthermore, the present invention includes a current-voltage state detection unit for detecting a state of a current phase and the second waveform signal output by the second waveform generation unit; and a waveform correction unit for outputting a correction waveform signal that is the second waveform signal corrected so that the state detected by the current-voltage state detection unit is made to agree with a target state. Furthermore, the present invention includes an operation switching unit for switching output so that the first waveform signal is output when a speed of the rotor is determined to be lower than a predetermined speed, and the correction waveform signal is output when the speed of the rotor is determined to be higher than the predetermined speed. Furthermore, the present invention includes a drive unit for outputting a drive signal to the inverter indicating a supplying timing of electric power supplied to the three-phase windings based on one of the first waveform signal and the correction waveform signal output from the operation switching unit. Furthermore, the present invention includes a protection unit for carrying out the protective control according to the state detected by the current-voltage detection state. Thus, phases of the current and the voltage of the brushless DC motor are maintained in an appropriate phase relation with respect to the phase of the induced voltage according to the drive speed, the load state, the state of the input voltage, and the like. As a result, even if the brushless DC motor is around the limit load state, the brushless DC motor is driven stably.

Furthermore, according to the present invention, the state detected by the current-voltage state detection unit is a time difference or a time ratio per cycle between the current phase and the second waveform signal;, and the protection unit has a threshold value and carries out the protective control so that the state detected by the current-voltage state detection unit becomes larger than the threshold value. Thus, the brushless DC motor is operated so that loss of synchronization or an overcurrent does not occur.

Furthermore, according to the present invention, the position detection unit detects a position based on a voltage induced by the brushless DC motor, and a timing when a terminal voltage of the brushless DC motor generated due to a return current flowing in the inverter is turned off as being a zero current phase, thereby detecting both the position and the current phase. Thus, since it is not necessary to newly provide a current phase detection unit, a low-cost and simple configuration is achieved.

Furthermore, according to the present invention, operation of the protective control carried out by the protection unit is to reduce a drive speed of the brushless DC motor. Thus, load is reduced before an overcurrent or loss of synchronization occurs, and therefore drive can be carried out with maximum capacity enabling drive to be carried out.

Furthermore, according to the present invention, operation of the protective control carried out by the protection unit is to stop the brushless DC motor and to restart driving after a predetermined time. Thus, even if a load is rapidly changed, destruction of an element, demagnetization of brushless DC motor 4, or the like, due to loss of synchronization or an overcurrent can be reliably prevented.

Furthermore, the present invention further includes an informing unit for informing that the protection unit has carried out operation of the protective control of the brushless DC motor. Thus, a user can know an overload state, and the user can change the load state.

Furthermore, according to the present invention has function of determining the speed of the rotor to be higher than a predetermined speed when a duty of the first waveform signal output by the first waveform generation unit exceeds a predetermined reference value, and the speed of the rotor to be lower than the predetermined speed when the position of the rotor is detectable by the position detection unit. Thus, since the speed of the rotor is determined only by duty, configuration is simplified.

Furthermore, according to the present invention, the rotor of the brushless DC motor comprises a permanent magnet embedded ino an iron core, and has saliency. Thus, reluctance torque by saliency together with magnetic torque can be used effectively.

Furthermore, according to the present invention, the brushless DC motor drives a compressor. Thus, the compressor is driven highly efficiently and a noise is reduced.

Furthermore, the present invention relates to electric equipment using a motor driving device having the above-mentioned configuration. Thus, the motor driving device is used in cooling apparatuses such as a refrigerator and an air conditioner as electric equipment, cooling performance can be improved by highly efficient drive.

### INDUSTRIAL APPLICABILITY

A motor driving device of the present invention extends a driving range of a brushless DC motor, and improves the stability of drive at high speed / under high load. Therefore, it can be used for various applications such as washing machines, cleaners, pumps, and the like, which use a brushless DC motor, in addition to electric equipment such as vending machines, showcases, heat pump water heaters, which use a compressor.

### REFERENCE MARKS IN THE DRAWINGS

3 inverter
4 brushless DC motor
4a rotor
4b stator
4c, 4d, 4e, 4f magnet (permanent magnet)
4g iron core
5 position detection unit
6 first waveform generation unit
8 frequency setting unit
9 waveform correction unit
10 second waveform generation unit
11 operation switching unit
12 drive unit
13 current detection unit
14 current phase detection unit
15 current-voltage state detection unit
16 protection unit
17 informing unit
19 compressor
23 motor driving device
24 refrigerator (electric equipment)

## Claims

1. A motor driving device (23) for driving a brushless DC motor (4) comprising a rotor (4a) and a stator (4b) having three-phase windings, the motor driving device (23) comprising:
an inverter (3) for supplying electric power to the three-phase windings;
a position detection unit (5) for detecting a phase of a terminal voltage and a rotation position of the rotor (4a);
a first waveform generation unit (6) for outputting a first waveform signal that is a waveform having a conduction angle of 120° or more and 150° or less based on position information from the position detection unit (5);
a frequency setting unit (8) for setting a frequency by changing only the frequency while keeping a duty constant;
a second waveform generation unit (10) for outputting a second waveform signal that is a waveform having a frequency set by the frequency setting unit (8), and having a conduction angle of 120° or more and less than 180°;
an operation switching unit (11) for switching output so that the first waveform signal is output when a speed of the rotor (4a) is determined to be lower than a predetermined speed, and the second waveform signal is output when the speed of the rotor (4a) is determined to be higher than the predetermined speed; and
a drive unit (12) for outputting a drive signal to the inverter (3) indicating a supplying timing of electric power supplied to the three-phase windings based on one of the first waveform signal and the second waveform signals output from the operation switching unit (11),
**characterized in that**
the motor driving device (23) further comprising
a current phase detection unit (14) for detecting a phase of a current flowing in the brushless DC motor (4), and
the second waveform generation unit (10) outputting the second waveform signal at a timing so that a phase difference between the phase of the current flowing in the brushless DC motor (4) and the phase of the terminal voltage is changed mildly or is allowed to approach the average value.

2. The motor driving device (23) of claim 1,
wherein the supplying timing of electric power supplied to the three-phase windings is temporarily corrected for maintaining a predetermined phase relation between the phase of the current and the phase of the terminal voltage of the brushless DC motor (4).

3. The motor driving device (23) of claim 1,
wherein switching of a winding in the three-phase windings to which the electric power is supplied is carried out at a predetermined timing with reference to the phase of the current of the brushless DC motor (4).

4. A motor driving device (23) for driving a brushless DC motor (4) comprising a rotor (4a) and a stator (4b) having three-phase windings, the motor driving device (23) comprising:
an inverter (3) for supplying electric power to the three-phase windings;
a position detection unit (5) for detecting a phase of a terminal voltage and a rotation position of the rotor (4a);
a first waveform generation unit (6) for outputting a first waveform signal that is a waveform having a conduction angle of 120° or more and 150° or less based on position information from the position detection unit (5);
a frequency setting unit (8) for setting a frequency by changing only the frequency while keeping a duty constant;
a second waveform generation unit (10) for outputting a second waveform signal that is a waveform having a conduction angle of 120° or more and less than 180° and a frequency set by the frequency setting unit (8);
an operation switching unit (11) for switching output so that the first waveform signal is output when a speed of the rotor (4a) is determined to be lower than a predetermined speed, and a correction waveform signal is output when the speed of the rotor (4a) is determined to be higher than the predetermined speed; and
a drive unit (12) for outputting a drive signal to the inverter (3) indicating a supplying timing of electric power supplied to the three-phase windings based on one of the first waveform signal and the correction waveform signal output from the operation switching unit (11);
**characterized in that**
the position detection unit (5) further detecting a phase of a current flowing in the brushless DC motor (4), and
the motor driving device (23) further comprising:
a current-voltage state detection unit (15) for detecting a state of a phase difference between the phase of the current flowing in the brushless DC motor (4) and the phase of the terminal voltage, and the second waveform signal output by the second waveform generation unit (10);
a waveform correction unit (9) for outputting the correction waveform signal that is the second waveform signal corrected so that the phase difference between the phase of the current flowing in the brushless DC motor (4) and the phase of the terminal voltage is changed mildly or is allowed to approach the average value; and
a protection unit (16) for carrying out the protective control according to the state detected by the current-voltage state detection unit (15).

5. The motor driving device (23) of claim 4,
wherein the state detected by the current-voltage state detection unit (15) is a time difference or a time ratio per cycle between the phase of the current flowing in the brushless DC motor (4) and the second waveform signal, and the protection unit (16) has a threshold value and carries out the protective control so that the state detected by the current-voltage state detection unit (15) becomes larger than the threshold value.

6. The motor driving device of claim 4,
wherein the position detection unit (5) detects a position based on a voltage induced by the brushless DC motor (4), and a timing when a terminal voltage of the brushless DC motor (4) generated due to a return current flowing in the inverter (3) is turned off as the phase of the current flowing in the brushless DC motor (4) being zero, thereby detecting both the position and the phase of the current flowing in the brushless DC motor (4).

7. The motor driving device (23) of claim 4,
wherein operation of the protective control carried out by the protection unit (16) is to reduce a drive speed of the brushless DC motor (4).

8. The motor driving device (23) of claim 4,
wherein operation of the protective control carried out by the protection unit (16) is to stop the brushless DC motor (4) and to restart driving after a predetermined time.

9. The motor driving device (23) of claim 4,
further comprising an informing unit (17) for informing that the protection unit (16) has carried out operation of the protective control of the brushless DC motor (4).

10. The motor driving device (23) of claim 4 having function of determining the speed of the rotor (4a) to be higher than a predetermined speed when a duty of the first waveform signal output by the first waveform generation unit (6) exceeds a predetermined reference value, and the speed of the rotor (4a) to be lower than the predetermined speed when the position of the rotor (4a) is detectable by the position detection unit (5).

11. The motor driving device (23) of claim 1 or 4,
wherein the rotor of (4a) the brushless DC motor (4) comprises a permanent magnet embedded in an iron core, and has saliency.

12. The motor driving device (23) of claim 1 or 4,
wherein the brushless DC motor (4) drives a compressor (19).

13. Electric equipment (24) comprising a brushless DC motor (4) driven by a motor driving device (23) of any one of claims 1 to 12.

## Patentansprüche

1. Motorantriebsvorrichtung (23) zum Antreiben eines bürstenlosen Gleichstrommotors (4), enthaltend einen Rotor (4a) und einen Stator (4b) mit dreiphasiger Wicklungsanordnung, wobei die Motorantriebsvorrichtung (23) enthält:
einen Wechselrichter (3) zum Zuführen elektrischer Leistung zu der dreiphasigen Wicklungsanordnung;
eine Positionserfassungseinheit (5) zum Erfassen einer Phase einer Klemmenspannung und einer Rotationsposition des Rotors (4a);
eine erste Wellenform-Erzeugungseinheit (6) zum Ausgeben eines ersten Wellenformsignals, das eine Wellenform mit einem Stromflusswinkel von 120° oder mehr und 150° oder weniger aufweist, basierend auf Positionsinformationen von der Positionserfassungseinheit (5);
eine Frequenzeinstelleinheit (8) zum Einstellen einer Frequenz durch ausschließliches Ändern der Frequenz, wobei ein Tastgrad konstant gehalten wird;
eine zweite Wellenform-Erzeugungseinheit (10) zum Ausgeben eines zweiten Wellenformsignals, das eine Wellenform ist, die eine von der Frequenzeinstelleinheit (8) eingestellte Frequenz aufweist und einen Stromflusswinkel von 120° oder mehr und weniger als 180° aufweist;
eine Betriebsschalteinheit (11) zum Schalten eines Ausgangssignals derart, dass das erste Wellenformsignal ausgegeben wird, wenn eine Drehzahl des Rotors (4a) als niedriger als eine vorherbestimmte Drehzahl bestimmt wird, und das zweite Wellenformsignal ausgegeben wird, wenn die Drehzahl des Rotors (4a) als höher als die vorherbestimmte Drehzahl bestimmt wird; und
eine Antriebseinheit (12) zum Ausgeben eines Antriebssignals an den Wechselrichter (3), das auf der Grundlage entweder des ersten Wellenformsignals oder des zweiten Wellenformsignals, das von der Betriebsschalteinheit (11) ausgegeben wird, einen Zuführungszeitablauf von elektrischer Leistung anzeigt, die der dreiphasigen Wicklungsanordnung zugeführt wird,
**dadurch gekennzeichnet, dass**
die Motorantriebsvorrichtung (23) ferner enthält:
eine Stromphasen-Erfassungseinheit (14) zum Erfassen einer Phase eines in den bürstenlosen Gleichstrommotor (4) fließenden Stroms, wobei
die zweite Wellenform-Erzeugungseinheit (10) das zweite Wellenformsignal mit einem Zeitablauf so ausgibt, dass eine Phasendifferenz zwischen der Phase des in dem bürstenlosen Gleichstrommotor (4) fließenden Stroms und der Phase der Klemmenspannung leicht verändert wird oder sich dem Mittelwert annähern darf.

2. Motorantriebsvorrichtung (23) nach Anspruch 1,
wobei der Zuführungszeitablauf von elektrischer Leistung, die der dreiphasigen Wicklungsanordnung zugeführt wird, vorübergehend korrigiert wird, um eine vorherbestimmte Phasenbeziehung zwischen der Phase des Stroms und der Phase der Klemmenspannung des bürstenlosen Gleichstrommotors (4) aufrechtzuerhalten.

3. Motorantriebsvorrichtung (23) nach Anspruch 1,
wobei das Schalten einer Wicklung in der dreiphasigen Wicklungsanordnung, zu der die elektrische Leistung zugeführt wird, mit einem vorherbestimmten Zeitablauf in Bezug auf die Phase des Stroms des bürstenlosen Gleichstrommotors (4) durchgeführt wird.

4. Motorantriebsvorrichtung (23) zum Antreiben eines bürstenlosen Gleichstrommotors (4), enthaltend einen Rotor (4a) und einen Stator (4b) mit dreiphasiger Wicklungsanordnung, wobei die Motorantriebsvorrichtung (23) enthält:
einen Wechselrichter (3) zum Zuführen elektrischer Leistung zu der dreiphasigen Wicklungsanordnung;
eine Positionserfassungseinheit (5) zum Erfassen einer Phase einer Klemmenspannung und einer Rotationsposition des Rotors (4a);
eine erste Wellenform-Erzeugungseinheit (6) zum Ausgeben eines ersten Wellenformsignals, das eine Wellenform mit einem Stromflusswinkel von 120° oder mehr und 150° oder weniger aufweist, basierend auf Positionsinformationen von der Positionserfassungseinheit (5);
eine Frequenzeinstelleinheit (8) zum Einstellen einer Frequenz durch ausschließliches Ändern der Frequenz, wobei ein Tastgrad konstant gehalten wird;
eine zweite Wellenform-Erzeugungseinheit (10) zum Ausgeben eines zweiten Wellenformsignals, das eine Wellenform ist, die einen Stromflusswinkel von 120° oder mehr und weniger als 180° aufweist und eine von der Frequenzeinstelleinheit (8) eingestellte Frequenz aufweist;
eine Betriebsschalteinheit (11) zum Schalten eines Ausgangssignals derart, dass das erste Wellenformsignal ausgegeben wird, wenn eine Drehzahl des Rotors (4a) als niedriger als eine vorherbestimmte Drehzahl bestimmt wird, und ein Korrektur-Wellenformsignal ausgegeben wird, wenn die Drehzahl des Rotors (4a) als höher als die vorherbestimmte Drehzahl bestimmt wird; und
eine Antriebseinheit (12) zum Ausgeben eines Antriebssignals an den Wechselrichter (3), das auf der Grundlage entweder des ersten Wellenformsignals oder des Korrektur-Wellenformsignals, das von der Betriebsschalteinheit (11) ausgegeben wird, einen Zuführungszeitablauf von elektrischer Leistung anzeigt, die der dreiphasigen Wicklungsanordnung zugeführt wird;
**dadurch gekennzeichnet, dass**
die Positionserfassungseinheit (5) ferner eine Phase eines in dem bürstenlosen Gleichstrommotor (4) fließenden Stroms erfasst, und
die Motorantriebsvorrichtung (23) ferner enthält:
eine Strom-Spannungs-Zustandserfassungseinheit (15) zum Erfassen eines Zustands einer Phasendifferenz zwischen der Phase des in dem bürstenlosen Gleichstrommotor (4) fließenden Stroms und der Phase der Klemmenspannung, und des zweiten Wellenformsignals, das von der zweiten Wellenform-Erzeugungseinheit (10) ausgegeben wird;
eine Wellenform-Korrektureinheit (9) zum Ausgeben des Korrektur-Wellenformsignals, das das zweite Wellenformsignal ist, das so korrigiert ist, dass die Phasendifferenz zwischen der Phase des in dem bürstenlosen Gleichstrommotor (4) fließenden Stroms und der Phase der Klemmenspannung leicht verändert wird oder sich dem Mittelwert annähern darf; und
eine Schutzeinheit (16) zum Durchführen der Schutzsteuerung entsprechend dem Zustand, der von der Strom-Spannungs-Zustandserfassungseinheit (15) erfasst wird.

5. Motorantriebsvorrichtung (23) nach Anspruch 4,
wobei der von der Strom-Spannungs-Zustandserfassungseinheit (15) erfasste Zustand eine Zeitdifferenz oder ein Zeitverhältnis pro Zyklus zwischen der Phase des in dem bürstenlosen Gleichstrommotor (4) fließenden Stroms und dem zweiten Wellenformsignal ist, und wobei die Schutzeinheit (16) einen Schwellenwert aufweist und die Schutzsteuerung so durchführt, dass der von der Strom-Spannungs-Zustandserfassungseinheit (15) erfasste Zustand größer als der Schwellenwert wird.

6. Motorantriebsvorrichtung nach Anspruch 4,
wobei die Positionserfassungseinheit (5) eine Position auf der Grundlage einer Spannung, die durch den bürstenlosen Gleichstrommotor (4) induziert wird, und einem Zeitpunkt, wenn eine Klemmenspannung des bürstenlosen Gleichstrommotors (4), die aufgrund eines in dem Wechselrichter (3) fließenden Rückstroms erzeugt wird, abgeschaltet wird, während die Phase des in dem bürstenlosen Gleichstrommotors (4) fließenden Stroms Null ist, erfasst, wodurch sowohl die Position als auch die Phase des in dem bürstenlosen Gleichstrommotor (4) fließenden Stroms erfasst wird.

7. Motorantriebsvorrichtung (23) nach Anspruch 4,
wobei der Betrieb der von der Schutzeinheit (16) ausgeführten Schutzsteuerung dazu dient, eine Antriebsdrehzahl des bürstenlosen Gleichstrommotors (4) zu reduzieren.

8. Motorantriebsvorrichtung (23) nach Anspruch 4,
wobei der Betrieb der von der Schutzeinheit (16) ausgeführten Schutzsteuerung dazu dient, den bürstenlosen Gleichstrommotor (4) anzuhalten und den Antrieb nach einer vorherbestimmten Zeit wieder zu starten.

9. Motorantriebsvorrichtung (23) nach Anspruch 4,
ferner eine Informationseinheit (17) enthaltend zum Informieren, dass die Schutzeinheit (16) den Betrieb der Schutzsteuerung des bürstenlosen Gleichstrommotors (4) durchgeführt hat.

10. Motorantriebsvorrichtung (23) nach Anspruch 4 mit der Funktion, die Drehzahl des Rotors (4a) als höher als eine vorherbestimmte Drehzahl zu bestimmen, wenn ein Tastgrad des ersten Wellenformsignals, das von der ersten Wellenform-Erzeugungseinheit (6) ausgegeben wird, einen vorherbestimmen Referenzwert überschreitet, und die Drehzahl des Rotors (4a) als niedriger als die vorherbestimmte Drehzahl zu bestimmen, wenn die Position des Rotors (4a) durch die Positionserfassungseinheit (5) erfassbar ist.

11. Motorantriebsvorrichtung (23) nach Anspruch 1 oder 4,
wobei der Rotor (4a) des bürstenlosen Gleichstrommotors (4) einen Permanentmagneten enthält, der in einem Eisenkern eingebettet ist und eine Salienz aufweist.

12. Motorantriebsvorrichtung (23) nach Anspruch 1 oder 4,
wobei der bürstenlose Gleichstrommotor (4) einen Kompressor (19) antreibt.

13. Elektrische Ausrüstung (24) enthaltend einen bürstenlosen Gleichstrommotor (4), der von einer Motorantriebsvorrichtung (23) nach einem der Ansprüche 1 bis 12 angetrieben wird.

## Revendications

1. Dispositif d'entraînement de moteur (23) pour entraîner un moteur à courant continu sans balais (4) comprenant un rotor (4a) et un stator (4b) ayant des enroulements triphasés, le dispositif d'entraînement de moteur (23) comprenant:
un onduleur (3) pour fournir de l'énergie électrique aux enroulements triphasés;
une unité de détection de position (5) pour détecter une phase d'une tension de borne et une position de rotation du rotor (4a);
une première unité de génération de forme d'onde (6) pour délivrer en sortie un premier signal de forme d'onde qui est une forme d'onde ayant un angle de conduction de 120° ou plus et 150° ou moins sur la base d'informations de position provenant de l'unité de détection de position (5);
une unité de réglage de fréquence (8) pour régler une fréquence en changeant seulement la fréquence tout en maintenant une constante de service;
une seconde unité de génération de forme d'onde (10) pour délivrer en sortie un second signal de forme d'onde qui est une forme d'onde ayant une fréquence réglée par l'unité de réglage de fréquence (8), et ayant un angle de conduction de 120° ou plus et inférieur à 180;
une unité de commutation de fonctionnement (11) pour commuter la sortie de telle sorte que le premier signal de forme d'onde est délivré en sortie lorsqu'une vitesse du rotor (4a) est déterminée comme étant inférieure à une vitesse prédéterminée, et le second signal de forme d'onde est délivré en sortie lorsque la vitesse du rotor (4a) est déterminée comme étant supérieure à la vitesse prédéterminée; et
une unité d'entraînement (12) pour délivrer en sortie un signal d'entraînement à l'onduleur (3) indiquant un instant d'alimentation de l'énergie électrique fournie aux enroulements triphasés sur la base de l'un du premier signal de forme d'onde et du second signal de forme d'onde délivrés en sortie par l'unité de commutation de fonctionnement (11),
**caractérisé en ce que**
le dispositif d'entraînement de moteur (23) comprend en outre
une unité de détection de phase de courant (14) pour détecter une phase d'un courant circulant dans le moteur à courant continu sans balais (4), et
la seconde unité de génération de forme d'onde (10) délivrant en sortie le second signal de forme d'onde à un instant de telle sorte qu'une différence de phase entre la phase du courant circulant dans le moteur à courant continu sans balais (4) et la phase de la tension de borne est modifiée légèrement ou est autorisée à s'approcher de la valeur moyenne.

2. Dispositif d'entraînement de moteur (23) de la revendication 1,
dans lequel l'instant d'alimentation de l'énergie électrique fournie aux enroulements triphasés est temporairement corrigé pour maintenir une relation de phase prédéterminée entre la phase du courant et la phase de la tension de borne du moteur à courant continu sans balais (4).

3. Dispositif d'entraînement de moteur (23) de la revendication 1,
dans lequel la commutation d'un enroulement dans les enroulements triphasés auxquels la puissance électrique est fournie est effectuée à un instant prédéterminé en référence à la phase du courant du moteur à courant continu sans balais (4).

4. Dispositif d'entraînement de moteur (23) pour entraîner un moteur à courant continu sans balais (4) comprenant un rotor (4a) et un stator (4b) ayant des enroulements triphasés, le dispositif d'entraînement de moteur (23) comprenant:
un onduleur (3) pour fournir de l'énergie électrique aux enroulements triphasés;
une unité de détection de position (5) pour détecter une phase d'une tension de borne et une position de rotation du rotor (4a);
une première unité de génération de forme d'onde (6) pour délivrer en sortie un premier signal de forme d'onde qui est une forme d'onde ayant un angle de conduction de 120° ou plus et 150° ou moins sur la base d'informations de position provenant de l'unité de détection de position (5);
une unité de réglage de fréquence (8) pour régler une fréquence en changeant seulement la fréquence tout en maintenant une constante de service;
une seconde unité de génération de forme d'onde (10) pour délivrer en sortie un second signal de forme d'onde qui est une forme d'onde ayant un angle de conduction de 120° ou plus et inférieure à 180° et une fréquence réglée par l'unité de réglage de fréquence (8);
une unité de commutation de fonctionnement (11) pour commuter la sortie de telle sorte que le premier signal de forme d'onde est délivré en sortie lorsqu'une vitesse du rotor (4a) est déterminée comme étant inférieure à une vitesse prédéterminée, et un signal de forme d'onde de correction est délivré en sortie lorsque la vitesse du rotor (4a) est déterminée comme étant supérieure à la vitesse prédéterminée; et
une unité d'entraînement (12) pour délivrer en sortie un signal d'entraînement à l'onduleur (3) indiquant un instant d'alimentation de l'énergie électrique fournie aux enroulements triphasés sur la base de l'un du premier signal de forme d'onde et du signal de forme d'onde de correction délivrés en sortie par l'unité de commutation de fonctionnement (11);
**caractérisé en ce que**
l'unité de détection de position (5) détecte en outre une phase d'un courant circulant dans le moteur à courant continu sans balais (4), et
le dispositif d'entraînement de moteur (23) comprenant en outre:
une unité de détection d'état de courant-tension (15) pour détecter un état d'une différence de phase entre la phase du courant circulant dans le moteur à courant continu sans balais (4) et la phase de la tension de borne, et le second signal de forme d'onde délivré en sortie par la seconde unité de génération de forme d'onde (10);
une unité de correction de forme d'onde (9) pour délivrer en sortie le signal de forme d'onde de correction qui est le second signal de forme d'onde corrigé de telle sorte que la différence de phase entre la phase du courant circulant dans le moteur à courant continu sans balais (4) et la phase de la tension de borne est modifiée légèrement ou est autorisée à s'approcher de la valeur moyenne; et
une unité de protection (16) pour effectuer la commande de protection selon l'état détecté par l'unité de détection d'état de courant-tension (15).

5. Dispositif d'entraînement de moteur (23) de la revendication 4,
dans lequel l'état détecté par l'unité de détection d'état de courant-tension (15) est une différence de temps ou un rapport de temps par cycle entre la phase du courant circulant dans le moteur à courant continu sans balais (4) et le second signal de forme d'onde, et l'unité de protection (16) a une valeur de seuil et effectue la commande de protection de telle sorte que l'état détecté par l'unité de détection d'état de courant-tension (15) devient supérieur à la valeur de seuil.

6. Dispositif d'entraînement de moteur de la revendication 4,
dans lequel l'unité de détection de position (5) détecte une position sur la base d'une tension induite par le moteur à courant continu sans balais (4), et un instant où une tension de borne du moteur à courant continu sans balais (4) générée en raison d'un courant de retour circulant dans l'onduleur (3) est coupée alors que la phase du courant circulant dans le moteur à courant continu sans balais (4) est nulle, ce qui permet de détecter à la fois la position et la phase du courant circulant dans le moteur à courant continu sans balais (4).

7. Dispositif d'entraînement de moteur (23) de la revendication 4,
dans lequel l'actionnement de la commande de protection effectué par l'unité de protection (16) a pour but de réduire une vitesse d'entraînement du moteur à courant continu sans balais (4).

8. Dispositif d'entraînement de moteur (23) de la revendication 4,
dans lequel l'actionnement de la commande de protection effectué par l'unité de protection (16) a pour but d'arrêter le moteur à courant continu sans balais (4) et de redémarrer l'entraînement après un temps prédéterminé.

9. Dispositif d'entraînement de moteur (23) de la revendication 4,
comprenant en outre une unité d'information (17) pour informer que l'unité de protection (16) a effectué l'actionnement de la commande de protection du moteur à courant continu sans balais (4).

10. Dispositif d'entraînement de moteur (23) de la revendication 4 ayant pour fonction de déterminer si la vitesse du rotor (4a) est supérieure à une vitesse prédéterminée lorsqu'un rapport cyclique du premier signal de forme d'onde délivré en sortie par la première unité de génération de forme d'onde (6) dépasse une valeur de référence prédéterminée, et si la vitesse du rotor (4a) est inférieure à la vitesse prédéterminée lorsque la position du rotor (4a) est détectable par l'unité de détection de position (5).

11. Dispositif d'entraînement de moteur (23) de la revendication 1 ou 4,
dans lequel le rotor (4a) du moteur à courant continu sans balais (4) comprend un aimant permanent intégré dans un noyau de fer, et présente un relief.

12. Dispositif d'entraînement de moteur (23) de la revendication 1 ou 4,
dans lequel le moteur à courant continu sans balais (4) entraîne un compresseur (19).

13. Équipement électrique (24) comprenant un moteur à courant continu sans balais (4) entraîné par un dispositif d'entraînement de moteur (23) de l'une quelconque des revendications 1 à 12.
